# EUROPÄISCHE PATENTSCHRIFT

(11) **EP 3 740 431 B1**
(45) Veröffentlichungstag und Bekanntmachung des Hinweises auf die Patenterteilung: **19.08.2026**
(21) Anmeldenummer: 19706858.8
(22) Anmeldetag: 17.01.2019
(51) Int. Cl.: B65G 1/04, B65G 47/82

(54) **LADUNGSTRÄGER FÜR PACKEINHEITEN, PACKEINHEITEN-ÜBERGABESTATION SOWIE KOMMISSIONIERSYSTEM ZUM LAGERN UND KOMMISSIONIEREN VON PACKEINHEITEN**
LOAD CARRIER FOR PACKING UNITS, PACKING UNIT TRANSFER STATION AND PICKING SYSTEM FOR STORING AND PICKING PACKING UNITS
SUPPORT DE CHARGEMENT POUR UNITÉS D'EMBALLAGE, STATION DE TRANSFERT D'UNITÉS D'EMBALLAGE ET SYSTÈME DE PRÉPARATION DE COMMANDE POUR LE STOCKAGE ET LA PRÉPARATION DE COMMANDE DES UNITÉS D'EMBALLAGE

(30) Priorität: 19.01.2018 AT 500452018
(43) Veröffentlichungstag der Anmeldung: 25.11.2020
(73) Patentinhaber: TGW Logistics GmbH, 4614 Marchtrenk (AT)
(72) Erfinder: SCHEDLBAUER, Michael, 94491 Hengersberg (DE); SCHMIDBERGER, Andreas, 4600 Wels (AT); SIKET, Christian Michael, 4040 Linz (AT); SCHRÖPF, Harald, 4600 Wels (AT)
(74) Vertreter: Burger, Hannes
(86) Internationale Anmeldenummer: PCT/AT2019/060016
(87) Internationale Veröffentlichungsnummer: WO 2019/140473

(56) Entgegenhaltungen:
- EP-A1- 1 698 573
- EP-A1- 3 162 742
- WO-A1-2008/022767
- WO-A1-2011/006598
- WO-A1-2011/078890
- US-A- 4 132 311
- US-A1- 2007 132 580
- US-A1- 2016 008 974

## Beschreibung

Die Erfindung betrifft einen Ladungsträger zum Transport und zur Lagerung verschiedener Packeinheiten in einem Kommissioniersystem, eine Packeinheiten-Übergabestation zum Beladen des Ladungsträgers und/oder Entladen des Ladungsträgers und ein Kommissioniersystem zum Lagern und Kommissionieren von Packeinheiten, wie in den Obergriffen der Ansprüche 1, 5 und 11 beschrieben.

Die EP 1 698 573 A1 offenbart einen Ladungsträger zum Transport und zur Lagerung verschiedener Packeinheiten in einem Kommissioniersystem, eine Packeinheiten-Übergabestation zum Beladen des Ladungsträgers und/oder Entladen des Ladungsträgers und ein Kommissioniersystem gemäß dem Obergriff der Ansprüche 1, 5 und 11.

Ebenso offenbaren die WO 2008/022767 A1 und die WO 2011/006598 A1 ähnliche Ladungsträger zum Transport und zur Lagerung verschiedener Packeinheiten in einem Kommissioniersystem, eine ähnliche Packeinheiten-Übergabestation zum Beladen des Ladungsträgers und/oder Entladen des Ladungsträgers und ein ähnliches Kommissioniersystem.

Insbesondere ist aus der EP 1 698 573 A1 ein Kommissioniersystem zum Lagern und Kommissionieren von Packeinheiten bekannt, bei dem die Packeinheiten von Anliefergebinden depalettiert und auf Ladungsträger (Tablare) einzeln umgeladen werden. Eine Packeinheit ist eine kleinste Einheit einer Warensendung. Die Tablare werden zu einem Tablarlager gefördert und im Tablarlager mit Förderfahrzeugen eingelagert / ausgelagert. Wird ein Kundenauftrag abgearbeitet, werden die benötigten Packeinheiten aus dem Tablarlager auf den Tablaren ausgelagert, in eine durch eine Beladungskonfiguration im Ladestapel definierte Beladereihenfolge sortiert und zu einer automatischen Kommissioniervorrichtung transportiert. Dort angekommen, wird die Packeinheit vom Tablar abgehoben und auf eine ortsfeste Ladeplatte übergeben und danach auf einen Auftrags-Ladungsträger gemäß der Beladungskonfiguration gestapelt. Jede Packeinheit wird auf einem eigenen Tablar abgelegt. Damit verbunden sind ein großer Raumbedarf zum Aufstellen der Lagerregale und hohe Anschaffungskosten. Ein größeres Tablarlager verlangt nach einer zunehmenden Anzahl an Förderfahrzeugen.

Die DE 41 43 282 C1 beschreibt einen Ladungsträger zum Transport und zur Lagerung einer Packeinheit, welcher einen mit einer Vielzahl von Öffnungen durchbrochenen Boden umfasst. Eine Packeinheiten-Übergabestation zum Entladen des Ladungsträgers weist eine Transfervorrichtung zum Abschieben der Packeinheit von dem Ladungsträger auf eine Fördervorrichtung und einen aus einer Ausgangsstellung in eine Abschiebestellung bewegbaren Profilkörper auf. Der Profilkörper bildet eine der Anzahl der Öffnungen entsprechende Anzahl an Transportrampen aus. Der Ladungsträger wird zum Entladen der Packeinheit auf einer Aufnahmevorrichtung vor der Fördervorrichtung positioniert. Danach wird der Profilkörper in die Abschiebestellung verstellt, in welcher die Transportrampen in die Öffnungen vorragen. Dabei überbrücken die Transportrampen einen Stufensprung zwischen der Aufnahmevorrichtung und der Fördervorrichtung. Die Transfervorrichtung schiebt die Packeinheit vom Ladungsträger über die Transportrampen auf die Fördervorrichtung ab.

Die US 2013/0062160 A1 offenbart einen Ladungsträger zum Transport und zur Lagerung einer Packeinheit, welcher einen mit Längsschlitzen versehenen Boden und mit Öffnungen durchbrochene Seitenwände umfasst. Eine Packeinheiten-Übergabestation zum Beladen des Ladungsträgers oder Entladen des Ladungsträgers umfasst mit gegenseitigem Abstand parallel angeordnete Förderriemen, welche in die Öffnungen eingreifen und in die Längsschlitze vorragen, um eine Packeinheit zwischen dem Ladungsträger und den Förderriemen zu transportieren.

Ebenso offenbart die EP 2 454 176 B1 einen Ladungsträger zum Transport und zur Lagerung einer Packeinheit, welcher einen mit Längsschlitzen versehenen Boden und mit Öffnungen durchbrochene Seitenwände umfasst.

Die EP 2 057 086 B1 offenbart einen Ladungsträger zum Transport und zur Lagerung einer Packeinheit, welcher einen mit einer Vielzahl von Öffnungen durchbrochenen Boden umfasst. Die WO 2010/012450 A2 offenbart ein Kommissioniersystem zum Lagern und Kommissionieren von Packeinheiten, bei dem Packeinheiten als Reihe hintereinander auf einem Ladungsträger gelagert sind.

Diese bekannten Ladungsträger stellen sich problematisch dar, wenn kleinere Packeinheiten oder biegeschlaffe Packeinheiten manipuliert werden müssen. Eine Packeinheit kann an den

Längsschlitzen im Boden und Öffnungen in den Seitenwänden hängen bleiben, wenn diese in einer Packeinheiten-Übergabestation von dem Ladungsträger auf einen Übernahmeplatz oder von einem Übergabeplatz auf den Ladungsträger transportiert wird. Darüber hinaus erweist es sich von Nachteil, dass bei Bruch einer Packeinheit die Flüssigkeit / der Feststoff durch die Öffnungen austritt und die Fördertechnik und das Lager verschmutzt. Es ist ein entsprechend hoher Wartungsaufwand erforderlich.

Verschiedene Ausführungen von Ladungsträgern zum Transport und zur Lagerung einer Packeinheit sind auch aus der US 4,533,585 A, EP 0 952 101 A2, WO 2013/178431 A1 und EP 2 955 121 A2 bekannt.

Die EP 3 162 742 A1 offenbart eine Sortiervorrichtung mit Ladungsträgern, welche jeweils um eine Achse kippbar sind, um Packeinheiten von den Ladungsträgern abzugeben.

Der vorliegenden Erfindung liegt die Aufgabe zugrunde, einen Ladungsträger und eine Packeinheiten-Übergabestation bereitzustellen, welche(r) einen zuverlässigen Betrieb eines (weitgehend) automatisierten Kommissioniersystems ermöglicht. Ferner ist es Aufgabe der Erfindung ein (weitgehend) automatisiertes Kommissioniersystem zu schaffen, in welchem verschiedene Packeinheiten zuverlässig transportiert und gelagert werden können.

Die Aufgabe der Erfindung wird durch die Merkmale des Anspruchs 1 gelöst.

Der erfindungsgemäße Ladungsträger bildet am Boden auf einem ersten Höhenniveau eine erste Ladeebene aus. Die erste Ladeebene ist eine durchgehend unterbrechungsfreie Transportfläche und nicht mit Längsschlitzen oder Öffnungen versehen. Auf der Transportfläche ist entweder eine einzige Packeinheit oder eine Anzahl an Packeinheiten abgestellt. Die einzige Packeinheit oder Anzahl an Packeinheiten werden vollflächig von unten unterstützt.

Der Ladungsträger kann auf der ersten Ladeebene beispielweise bis zu vier Packeinheiten aufnehmen. Dadurch kann gegenüber solchen aus dem Stand der Technik bekannten Kommissioniersystemen mit einer einzigen Packeinheit je Ladungsträger auf das gleiche Lagervolumen eine wesentlich höhere Anzahl an Packeinheiten im Packeinheitenlager gelagert werden (höhere Lagerdichte). Die Packeinheiten werden bevorzugt in einer Reihe hintereinander abgestellt. Grundsätzlich können die Packeinheiten auch in einer Reihe nebeneinander auf der ersten Ladeebene abgestellt werden. In dieser Reihe sind Packeinheiten einer einzigen Breitenklasse enthalten. Die Breitenabmessung innerhalb dieser Breitenklasse kann geringfügig variieren, beispielweise ± 20% von einer Ausgangsbreite. So können die Ladungsträger mit unterschiedlichen Breitenklassen beladen werden.

Auch können die Packeinheiten in mehreren Reihen nebeneinander abgestellt werden. Bevorzugt ist eine Variante, nach welcher die Packeinheiten in einer Reihe hintereinander abgestellt werden. In diesem Fall sind die Packeinheiten jeder Reihe jeweils derselben Breitenklasse zugeteilt oder die Packeinheiten jeder Reihen jeweils verschiedenen Breitenklassen zugeteilt. Ist der Ladungsträger beispielsweise mit zwei Reihen und je Reihe mit zwei Packeinheiten beladen, so sind die erste Reihe als auch die zweite Reihe der ersten Breitenklasse zugeteilt oder die erste Reihe der ersten Breitenklasse und die zweite Reihe der zweiten Breitenklasse. Innerhalb der jeweiligen Reihe sind die Packeinheiten einer einzigen Breitenklasse enthalten, beispielweise enthält die erste Reihe die Packeinheiten einer ersten Breitenklasse und die zweite Reihe die Packeinheiten einer zweiten Breitenklasse. Die Breitenabmessung der Packeinheiten innerhalb der jeweiligen Breitenklasse kann variieren.

Unabhängig davon, wie die Packeinheiten auf dem Ladungsträger gelagert sind, kann es sich von Vorteil erweisen, wenn je Ladungsträger ein einziger Artikeltyp enthalten ist, daher so genannte "artikelreine" Ladungsträger bereitgestellt werden. Werden Artikel auf einem Ladungsträger gemischt gelagert, so sind die Packeinheiten einer Breitenklasse zugeteilt.

Der erfindungsgemäße Ladungsträger bildet am Boden zusätzlich auf einem zweiten Höhenniveau eine zweite Ladeebene aus, wobei die erste Ladeebene in einer Ladebreite durch parallel zueinander und im Wesentlichen vertikal zur ersten Ladeebene ausgerichtete erste Anschlagkanten begrenzt ist und wobei die zweite Ladeebene in einer Ladebreite durch parallel zueinander verlaufende und im Wesentlichen vertikal zur zweiten Ladeebene ausgerichtete zweite Anschlagkanten begrenzt ist und wobei die zweite Ladebreite größer gestaltet ist als die erste Ladebreite.

Das Sortiment an Packeinheiten wird vorzugsweise durch ein elektronisches Rechnersystem in verschiedene Breitenklassen eingeteilt. Die Anzahl an Breitenklassen kann abhängig von der Sortimentsbreite variieren. Es werden zumindest zwei Breitenklassen definiert.

Es kann nun vorgesehen werden, dass ein erster Ladungsträger mit Packeinheiten einer ersten Breitenklasse und ein zweiter Ladungsträger mit Packeinheiten einer zweiten Breitenklasse beladen. Die Abmessungen der Ladungsträger variieren jedoch nicht und weisen stets dieselben Abmessungen auf. Sind die Packeinheiten einer ersten Breitenklasse (Packeinheiten mit kleineren Abmessungen) zugeteilt, kann dementsprechend eine höhere Anzahl an Packeinheiten auf einem Ladungsträger abgestellt werden, beispielweise drei Packeinheiten mit den Abmessungen 200 mm (Länge) x 150 mm (Breite) je Ladungsträger. Sind die Packeinheiten einer zweiten Breitenklasse (Packeinheiten mit größeren Abmessungen) zugeteilt, kann dementsprechend eine niedrigere Anzahl an Packeinheiten auf einem Ladungsträger abgestellt werden, beispielweise eine einzige Packeinheit mit den Abmessungen 600 mm (Länge) x 400 mm (Breite) je Ladungsträger.

Nachdem die Ladungsträger jeweils mit verschiedenen Ladeebenen ausgestattet sind, kann auf einem ersten Ladungsträger auf einer ersten Ladeebene zwischen den ersten Anschlagkanten eine Packeinheit aus der ersten Breitenklasse gelagert und auf einem zweiten Ladungsträger auf einer zweiten Ladeebene zwischen den zweiten Anschlagkanten eine Packeinheit aus der zweiten Breitenklasse gelagert werden.

In der ersten Breitenklasse beträgt eine Breitenabmessung der Packeinheiten zwischen 100 mm und 250 mm. Die Längenabmessung kann zwischen 100 mm und 600 mm variieren. In der zweiten Breitenklasse beträgt eine Breitenabmessung der Packeinheiten zwischen 250 mm und 400 mm. Die Längenabmessung kann zwischen 100 mm und 600 mm variieren. Je nach Längenabmessung kann auf der ersten Ladeebene eine entsprechende Anzahl an Packeinheiten oder auf der zweiten Ladeebene eine entsprechende Anzahl an Packeinheiten abgestellt werden.

In der zweiten Breitenklasse beträgt eine Breitenabmessung der Packeinheiten zwischen 250 mm und 400 mm. Es erweist sich von Vorteil, wenn je Ladeebene eine Breitenklasse definiert wird. Im gezeigten Beispiel sind zwei Ladeebenen und zwei Breitenklassen definiert.

Sind zusätzliche Ladeebenen vorgesehene, so wird auch eine zusätzliche Breitenklasse definiert. Sind drei Ladeebenen vorgesehen, so kann eine Breitenabmessung der Packeinheiten in der ersten Breitenklasse zwischen 100 mm und 160 mm, eine Breitenabmessung der Packeinheiten in der zweiten Breitenklasse zwischen 200 mm und 260 mm, und eine Breitenabmessung der Packeinheiten in der dritten Breitenklasse zwischen 300 mm und 400 mm betragen.

Durch die Abstufung der Ladeebenen können die einzelnen Packeinheiten oder die Packeinheiten durch die Anschlagkanten seitlich geführt werden, wenn die Packeinheit(en) vom Ladungsträger auf den Übernahmeplatz abgeschoben oder die Packeinheit(en) vom Übergabeplatz auf den Ladungsträger aufgeschoben werden.

In einer einfachen Ausprägung bildet der Ladungsträger lediglich an der ersten Seitenwand die erste Transportrampe, erste Führungsauflage und erste Kante aus. Die zweite Seitenwand kann hingegen durch einen an der ersten Ladeebene vorragenden Randsteg gebildet sein. Nach dieser Ausbildung kann der Ladungsträger von einer (einzigen) Seite entladen oder beladen werden.

Der Ladungsträger ist entweder einteilig oder mehrteilig aufgebaut. Beispielweise können der Boden, die erste Seitenwand (mit der Transportrampe, Führungsauflage und Kante) und zweite Seitenwand im Spritzgießverfahren einstückig hergestellt werden. Andererseits kann die erste Transportrampe auch getrennt im Spritzgießverfahren einstückig hergestellt werden und mit dem Boden und/oder der ersten Seitenwand verbunden werden. Nach letzterer Ausführung ist die Kante an der ersten Transportrampe ausgebildet.

Es erweist sich auch von Vorteil, wenn der Ladungsträger an der zweiten Seitenwand zwischen der ersten Längsseite und zweiten Längsseite eine zweite Transportrampe, welche an die Transportfläche anschließt und eine Schrägfläche ausbildet, die mit der Transportfläche einen Winkel (α) zwischen 135° und 160° einschließt, und eine zweite Führungsauflage, welche an die zweite Transportrampe anschließt und eine im Wesentlichen parallel zur Transportfläche verlaufende Führungsfläche ausbildet, und eine zweite Kante zwischen der zweiten Transportrampe und der zweiten Führungsauflage ausbildet.

Nach dieser Ausbildung kann der Ladungsträger von einer ersten Seite entladen und von einer zweiten Seite beladen werden. Andererseits kann dieser Ladungsträger auch von einer einzigen Seite entladen oder beladen werden, wenn dies zweckdienlicher ist. Die symmetrische Anordnung der Transportrampe, Führungsauflage und Kante ermöglicht einen vielfältigen Einsatz des Ladungsträgers. Der Ladungsträger ist entweder einteilig oder mehrteilig aufgebaut. Beispielweise können der Boden, die erste Seitenwand (mit der ersten Transportrampe, ersten Führungsauflage und ersten Kante) und zweite Seitenwand (mit der zweiten Transportrampe, zweiten Führungsauflage und zweiten Kante) im Spritzgießverfahren einstückig hergestellt werden. Andererseits kann die erste Transportrampe / zweite Transportrampe auch getrennt im Spritzgießverfahren einstückig hergestellt werden und mit dem Boden und/oder ersten Seitenwand / zweiten Seitenwand verbunden werden. Nach letzterer Ausführung ist die erste Kante an der ersten Transportrampe und die zweite Kante an der zweiten Transportrampe ausgebildet. Die Transportfläche auf der ersten Ladeebene erstreckt sich zwischen der ersten Transportrampe und zweiten Transportrampe.

Es ist auch von Vorteil, wenn die erste Kante und/oder zweite Kante jeweils mit einem Radius verrundet sind. Der Radius beträgt mindestens 5 mm. Dadurch wird ein sanftes Kippen der Packeinheit über die Kante erreicht. Auch wird ein schonender Transport begünstigt. Es können nunmehr auch Packeinheiten mit empfindlicher Oberfläche, beispielsweise eine Verpackungsfolie aus Kunststoff problemlos geschoben werden, ohne die Oberfläche zu beschädigen.

Die Aufgabe der Erfindung wird auch durch die Merkmale des Anspruchs 5 gelöst.

Der erfindungsgemäße Ladungsträger kann in der Packeinheiten-Übergabestation besonders einfach entladen und/oder beladen werden.

Wird der Ladungsträger an der Packeinheiten-Übergabestation beladen, wird die einzige Packeinheit oder Anzahl von Packeinheiten von einem Übergabeplatz auf den Ladungsträger, welcher auf einem Andienungsplatz bereitgestellt wird, (ohne Heben) geschoben, wobei die Packeinheit(en) über die erste Führungsfläche und die erste Transportrampe auf die Transportfläche gleitet(n) oder die Packeinheit(en) über die zweite Führungsfläche und die zweite Transportrampe auf die Transportfläche gleitet(n). Befindet sich der Ladungsträger auf dem Andienungsplatz vor dem Übergabeplatz, liegt die erste / zweite Führungsfläche auf gleichem Höhenniveau wie die von dem Übergabeplatz ausgebildete Förderebene oder geringfügig unterhalb der von dem Übergabeplatz ausgebildeten Förderebene. Die Packeinheit(en) kann besonders schonend vom Übergabeplatz auf den Ladungsträger transportiert werden.

Wird der Ladungsträger an der Packeinheiten-Übergabestation entladen, wird die einzige Packeinheit oder Anzahl von Packeinheiten von dem Ladungsträger, welcher auf einem Andienungsplatz bereitgestellt wird, auf einen Übernahmeplatz geschoben, wobei die Packeinheit(en) auf der Transportfläche über die erste Transportrampe und erste Führungsfläche gleitet(n) oder die Packeinheit(en) auf der Transportfläche über die zweite Transportrampe und zweite Führungsfläche gleitet(n). Befindet sich der Ladungsträger auf dem Andienungsplatz vor dem Übernahmeplatz, liegt die erste / zweite Führungsfläche auf gleichem Höhenniveau wie die von dem Übernahmeplatz ausgebildete Förderebene oder geringfügig oberhalb der von dem Übernahmeplatz ausgebildeten Förderebene. Die Packeinheit(en) kann besonders schonend vom Ladungsträger auf den Übernahmeplatz transportiert werden.

Nachdem der Ladungsträger zumindest eine zusätzliche Ladeebene definiert, gleitet(n) beim Beladen die Packeinheit(en) über die erste / zweite Führungsfläche und die erste / zweite Transportrampe und abhängig von der Breitenklasse entweder auf die Transportfläche auf der ersten Ladeebene oder auf die Transportfläche auf der zweiten Ladeebene etc. Andererseits gleitet(n) beim Entladen die Packeinheit(en) abhängig von der Breitenklasse von der Transportfläche auf der ersten Ladeebene oder von der Transportfläche auf der zweiten Ladeebene etc. über die erste / zweite Transportrampe auf die erste / zweite Führungsfläche.

Es erweist sich auch von Vorteil, dass der Ladungsträger zum Beladen und/oder Entladen an der Packeinheiten-Übergabestation auf einem stationären Andienungsplatz lediglich in eine Andienungsposition positioniert werden muss. Mit anderen Worten, wird der Ladungsträger auf einer ortsfesten horizontalen Arbeitsebene bereitgestellt. Der Andienungsplatz kann auf einer automatisierten Fördervorrichtung des Fördersystems ausgebildet sein. In diesem Fall entspricht die Förderebene im Bereich des Andienungsplatzes der Arbeitsebene. Ein Kippen des Ladungsträgers um eine Längsseite und/oder Stirnseite relativ zur Arbeitsebene (bzw. Förderebene) ist nicht erforderlich, um den Ladungsträger zu beladen und/oder zu entladen. Es ist auch vorgesehen, dass die Packeinheiten-Übergabestation ein Ladungsträger-Positioniersystem zum Positionieren des Ladungsträgers relativ gegenüber der Transfervorrichtung aufweist. Der Ladungsträger wird auf dem Andienungsplatz in eine Andienungsposition positioniert, in welcher der Ladungsträger einerseits mit einer Längsachse senkrecht zu einer Schiebefläche ausgerichtet und andererseits die Längsachse mittig zum Andienungsplatz zentriert ist. Somit ist sichergestellt, dass eine einzelne Packeinheit, aber auch eine Reihe von Packeinheiten ohne Verdrehung in Abschieberichtung transportiert werden können. Sind gemäß der Erfindung mehrere Ladeebenen vorgesehen, so ist auf der Abschiebebewegung auch eine seitliche Führung der einzelnen Packeinheit oder der Packeinheiten vorgesehen.

Nach einer vorteilhaften Ausgestaltung der Packeinheiten-Übergabestation zum Beladen eines Ladungsträgers ist es vorgesehen, dass diese ein Packeinheiten-Positioniersystem zum Positionieren der zumindest einen Packeinheit relativ gegenüber dem am Fördersystem in einer Andienungsposition auf dem Andienungsplatz bereitgestellten Ladungsträger aufweist. Der Ladungsträger wird auf dem Andienungsplatz in eine Andienungsposition positioniert, wie oben beschrieben. Zusätzlich kann auch die einzelne Packeinheit oder eine Reihe von Packeinheiten vor deren Übergabe vom Übergabeplatz auf den Ladungsträger relativ gegenüber dem Ladungsträger positioniert werden. Somit ist sichergestellt, dass eine einzelne Packeinheit, aber auch eine Reihe von Packeinheiten ohne Verdrehung in Abschieberichtung transportiert werden können.

Gemäß einer Ausbildung der Erfindung umfasst die Transfervorrichtung einen relativ gegenüber einem in der Andienungsposition auf dem Andienungsplatz bereitgestellten Ladungsträger bewegbaren und auf einem Grundrahmen gelagerten Schieber. Der Schieber ist mit einer Antriebsvorrichtung gekoppelt und wird aus einer Ruhestellung in eine Entladestellung oder aus einer Ruhestellung in eine Beladestellung bewegt, um zumindest eine Packeinheit von dem Ladungsträger auf den Übernahmeplatz abzuschieben oder von einem Übergabeplatz auf den Ladungsträger aufzuschieben. Der Schieber kann im einfachsten Fall eine translatorische Schiebebewegung ausführen und dabei die Packeinheiten auf den Ladungsträger aufschieben oder von dem Ladungsträger abschieben, wobei die Abschieberichtung parallel zur Längsachse des Ladungsträgers verläuft.

Es ist auch von Vorteil, wenn die Antriebsvorrichtung einen elektronisch geregelten Stellmotor aufweist und welche mit einer Steuervorrichtung verbunden ist, die ihrerseits die Antriebsvorrichtung derart ansteuert, dass der Schieber eine berechnete Anzahl an Packeinheiten von dem Ladungsträger auf den Übernahmeplatz abschiebt oder eine berechnete Anzahl an Packeinheiten von dem Übergabeplatz auf den Ladungsträger aufschiebt. Durch den geregelten Antrieb kann die Abschiebebewegung überwacht und der Abschiebeweg ausgewertet (berechnet) werden. Sind zu den Packeinheiten auch die Längenabmessungen in einem mit der Steuervorrichtung verbundenen Rechnersystem (mit der Datenbank) elektronisch erfasst, kann basierend auf der Längenabmessung der Packeinheiten und/oder Anzahl der Packeinheiten der Abschiebeweg berechnet werden.

Nach einer anderen Ausgestaltung der Erfindung ist es möglich, dass die Packeinheiten-Übergabestation eine Überwachungsvorrichtung, insbesondere eine Sensorik, zum Erfassen einer Übergabe einer Packeinheit von dem Übergabeplatz auf den Ladungsträger oder zum Erfassen einer Übergabe einer Packeinheit von dem Ladungsträger auf den Übernahmeplatz aufweist, wobei eine Steuervorrichtung mit der Überwachungsvorrichtung verbunden ist und die Transfervorrichtung ansteuert, um eine Packeinheit vom Übergabeplatz auf den Ladungsträger aufzuschieben oder eine Packeinheit vom Ladungsträger auf den Übernahmeplatz abzuschieben. Mit dieser Maßnahme kann die Übergabe einer Packeinheit von dem Übergabeplatz auf den Ladungsträger oder die Übergabe einer Packeinheit von dem Ladungsträger auf den Übernahmeplatz ausgewertet werden.

Die Aufgabe der Erfindung wird auch durch die Merkmale des Anspruchs 11 gelöst.

Im erfindungsgemäßen Kommissioniersystem können über den oben beschriebenen Ladungsträger und die oben beschriebene Packeinheiten-Übergabestation verschiedene Packeinheiten zuverlässig transportiert und gelagert werden können.

Zum besseren Verständnis der Erfindung wird diese anhand der nachfolgenden Figuren näher erläutert.

Es zeigen jeweils:
- Fig. 1: ein Blockschaltbild zu einer bespielhaften Ausführung eines Kommissioniersystems;
- Fig. 2a, 2b: zeigt wesentliche Verfahrensschritte zu einem Kommissioniersystem gemäß Fig. 1;
- Fig. 3a-3d: eine nicht erfindungsgemäße erste Ausführung eines Ladungsträgers in unterschiedlichen Ansichten;
- Fig. 4a-4d: eine erfindungsgemäße zweite Ausführung eines Ladungsträgers in unterschiedlichen Ansichten;
- Fig. 5a, 5b: eine erfindungsgemäße dritte Ausführung eines Ladungsträgers und unterschiedliche Packeinheiten in perspektivischen Ansichten;
- Fig. 6a-6d: der Ladungsträger nach Fig. 5a, 5b in unterschiedlichen Ansichten;
- Fig. 7a, 7b: eine Packeinheiten-Übergabestation zum Entladen eines Ladungsträgers in perspektivischen Ansichten;
- Fig. 8a-8d: die Packeinheiten-Übergabestation zum Entladen eines Ladungsträgers und eine an diese anschließende erste Fördervorrichtung zum Antransport beladener Ladungsträger und eine an diese anschließende zweite Fördervorrichtung zum Abtransport vollständig entladener oder teilweise entladener Ladungsträger;
- Fig. 9a, 9b: die Packeinheiten-Übergabestation zum Entladen eines Ladungsträgers nach Fig. 7a, 7b;
- Fig. 9c: die Packeinheiten-Übergabestation zum Entladen eines Ladungsträgers bei einem Abschiebevorgang von Packeinheiten vom Ladungsträger auf einen Übernahmeplatz auf einer Fördervorrichtung zum Abtransport von Packeinheiten;
- Fig. 10: eine Packeinheiten-Übergabestation zum Beladen eines Ladungsträgers in perspektivischer Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

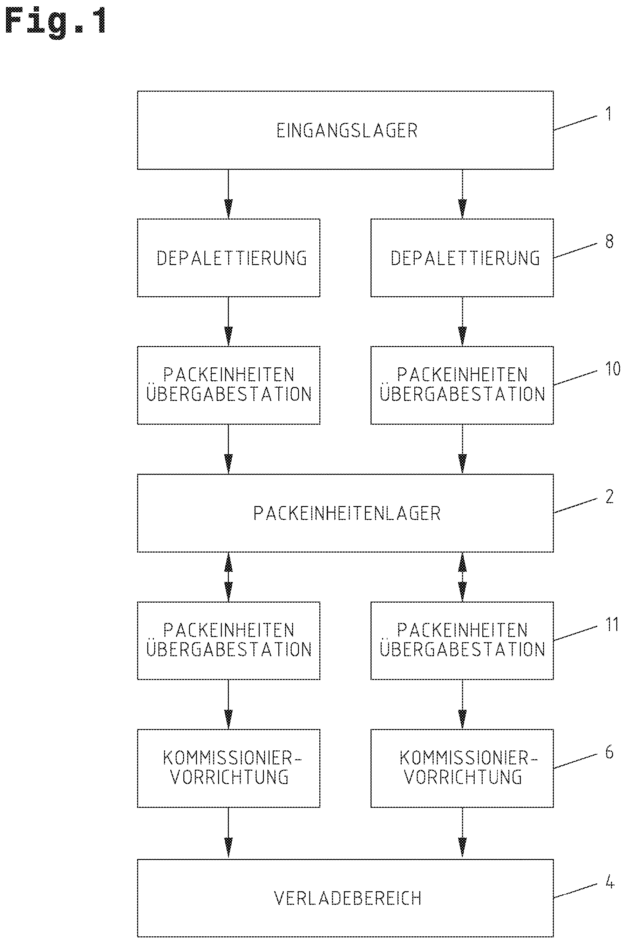

In Fig. 1 ist ein Kommissioniersystem zum Lagern und Kommissionieren von Packeinheiten als Blockdiagramm dargestellt.

Ein solches Kommissioniersystem umfasst üblicherweise ein Eingangslager 1, ein Lager 2 für Packeinheiten 3 (Colli) und einen Verladebereich 4. Das Eingangslager 1 kann als manuelles Lager, teilautomatisiertes Lager oder vollautomatisches Lager ausgebildet sein. Im Eingangslager 1 werden die Packeinheiten 3 auf Lagergebinden, beispielweise Paletten, Container, und dgl. angeliefert und auf Lagerregalen gelagert. Die Packeinheiten 3 sind auf dem Lagergebinde gestapelt, insbesondere sortenrein gestapelt.

In einer bevorzugten Ausführung ist das Eingangslager 1 als automatisiertes Palettenlager ausgebildet. Ein solches Palettenlager umfasst Lagerregale und jeweils in einer Regalgasse zwischen Lagerregalen verfahrbare Regalbediengeräte zum Einlagern von Lagergebinden in die Lagerregale und Auslagern von Lagergebinden aus den Lagerregalen. Die Lagerregale umfassen in übereinander liegenden Regalebenen (RE) nebeneinander eine Vielzahl von Lagerplätzen, auf welchen die Lagergebinde abgestellt werden können. Die genannten Regalbediengeräte sind mit einer Lastaufnahmevorrichtung ausgestattet, welche in einer Querrichtung (z-Richtung) doppelseitig ein oder mehrere Lagergebinde in die Lagerregale einlagern und aus den Lagerregalen auslagern kann.

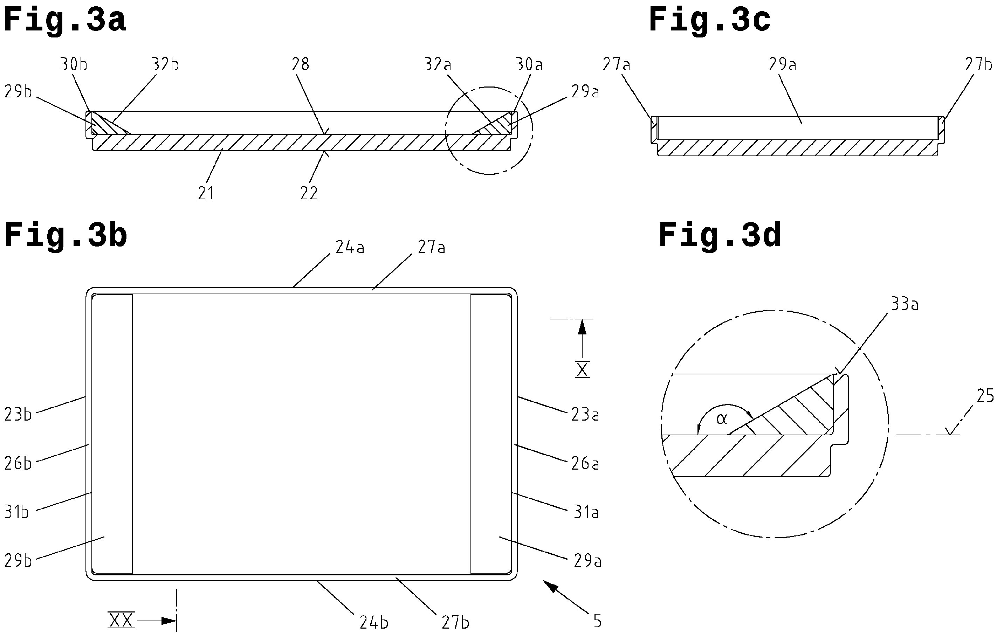

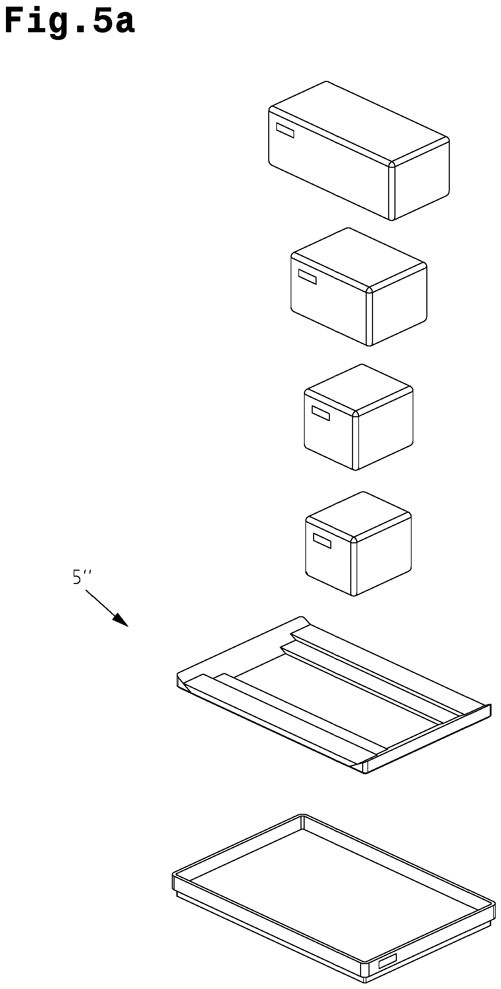

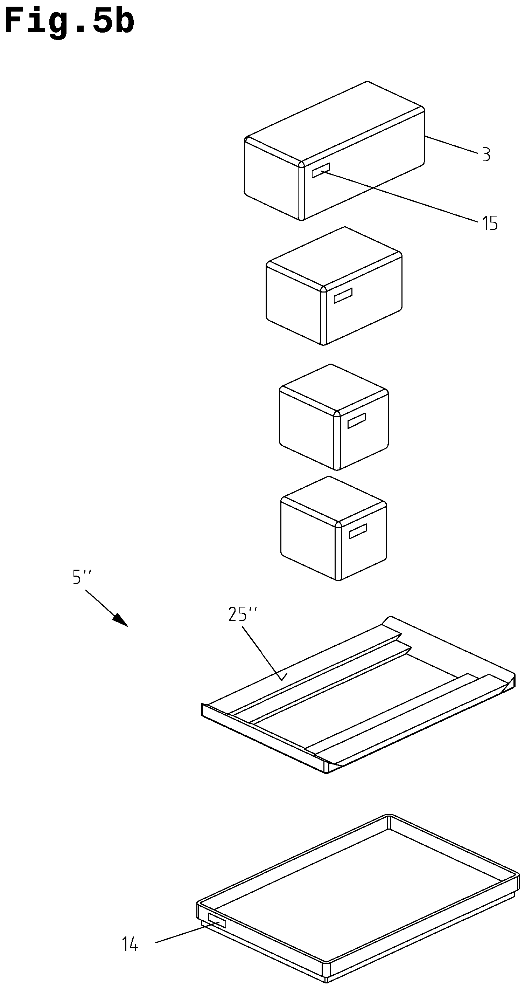

Das Lager 2 für Packeinheiten 3 ist in einer bevorzugten Ausführung ebenso als automatisiertes Lager ausgebildet. Die Packeinheiten 3 sind dabei auf Ladungsträgern 5, 5', 5" gelagert, wie sie im Nachfolgenden noch in den Fig. 3a-3d, 4a-4d, 6a-6d im Detail beschrieben werden. Die Packeinheiten 3 sind von unterschiedlicher Abmessung, wie in den Fig. 5a, 5b dargestellt.

Ein solches Lager 2 umfasst Lagerregale und jeweils in einer Regalgasse zwischen Lagerregalen verfahrbare Regalbediengeräte zum Einlagern von Ladungsträgern 5, 5', 5" in die Lagerregale und Auslagern von Ladungsträgern 5, 5', 5" aus den Lagerregalen. Die Lagerregale umfassen in übereinander liegenden Regalebenen (RE) nebeneinander eine Vielzahl von Lagerplätzen, auf welchen die Ladungsträger 5, 5', 5" abgestellt werden können. Somit bildet jedes Lagerregal in übereinander liegenden Regalebenen (RE) nebeneinander eine Vielzahl von Lagerplätzen aus.

Bevorzugt sind je Regalgasse in übereinander liegenden Fahrebenen unabhängig voneinander ansteuerbare Regalbediengeräte zum Einlagern von Ladungsträgern 5, 5', 5" in die Lagerregale und Auslagern von Ladungsträgern 5, 5', 5" aus den Lagerregalen angeordnet. Beispielweise kann jeder Regalebene (RE) zumindest ein Regalbediengerät zugeordnet werden. Somit bedient ein Regalbediengerät eine Regalebene. Solche Regalbediengeräte bezeichnet man als Einebenenregalbediengeräte (Shuttle).

Es können aber auch weniger Regalbediengeräte als Regalebenen (RE) eingesetzt werden. Beispielsweise wird ein Regalbediengerät über eine Hebevorrichtung zwischen den Fahrebenen umgesetzt.

Möglich ist aber auch eine Ausführung, bei der je Regalgasse ein einziges Regalbediengerät zum Einlagern von Ladungsträgern 5, 5', 5" in die Lagerregale und Auslagern von Ladungsträgern 5, 5', 5" aus den Lagerregalen vorgesehen ist.

Die genannten Regalbediengeräte sind mit einer Lastaufnahmevorrichtung ausgestattet, welche in einer Querrichtung (z-Richtung) doppelseitig ein oder mehrere Ladungsträger 5, 5', 5" in die Lagerregale einlagern und aus den Lagerregalen auslagern kann.

Der Verladebereich 4 umfasst auch zumindest eine Kommissioniervorrichtung 6 zum manuellen oder automatisierten Beladen von Auftrags-Ladungsträger (Ausliefergebinde). In Fig. 1 sind beispielweise zwei Kommissioniervorrichtungen 6 eingetragen. Der Auftrags-Ladungsträger ist beispielweise ein Rollcontainer oder Palette, auf welchem die Packeinheiten 3 gemäß einem Kommissionierauftrag gestapelt werden. Eine Kommissioniervorrichtung 6 zum manuellen Beladen von Auftrags-Ladungsträgern ist beispielweise in der WO 2009/109218 A1 beschrieben. Eine Kommissioniervorrichtung 6 zum automatisierten Beladen von Auftrags-Ladungsträgern ist beispielweise in der US 8,708,637 B2 beschrieben.

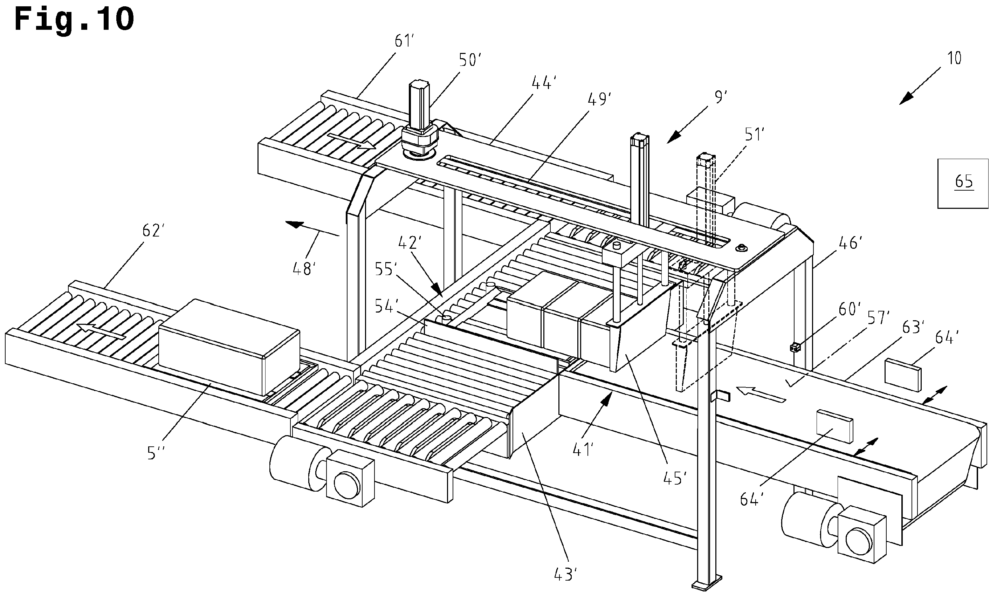

Wie in Fig. 1 eingetragen, ist zwischen dem Eingangslager 1 und dem Packeinheitenlager 2 zumindest eine erste Packeinheiten-Übergabestation 10 vorgesehen, wie in Fig. 10 näher dargestellt. In Fig. 1 sind beispielweise zwei Packeinheiten-Übergabestationen 10 eingetragen. An der ersten Packeinheiten-Übergabestation 10 werden die Ladungsträger 5, 5', 5" mit Packeinheiten 3 beladen. Die Packeinheiten 3 können vereinzelt oder gruppenweise auf den Ladungsträgern 5 abgelegt werden. Das Beladen der Ladungsträger 5, 5', 5" kann manuell oder automatisch erfolgen.

Nach einer ersten Ausführung (nicht dargestellt) können die Packeinheiten 3 von einem Werker auf die Ladungsträger 5, 5', 5" manuell umgeladen werden. Hierzu werden im Nahbereich einer ersten Packeinheiten-Übergabestation die Lagergebinde bereitgestellt und der Werker kann die Packeinheiten 3 direkt von einem Lagergebinde entnehmen und vereinzelt auf den Ladungsträger 5, 5', 5" ablegen. Andererseits können die Packeinheiten 3 über eine geeignete Depalettiervorrichtung 8, wie sie beispielweise in der US 8,668,429 B2 beschrieben ist, von einem Lagergebinde depalettiert und über eine geeignete Vereinzelungsvorrichtung, wie sie beispielweise in der EP 2 297 005 B1 beschrieben ist, vereinzelt und über eine automatisierte Fördertechnik zu einer Packeinheiten-Andienungsvorrichtung in den Nahbereich einer ersten Packeinheiten-Übergabestation gefördert werden, wo der Werker die (vereinzelten) Packeinheiten entnehmen und auf die Ladungsträger 5, 5', 5" manuell umladen kann. In Fig. 1 sind beispielweise zwei Depalettiervorrichtungen 8 eingetragen.

Nach einer zweiten Ausführung können die Packeinheiten 3 von einer Transfervorrichtung 9' auf die Ladungsträger 5, 5', 5" automatisch umgeladen werden. Eine solche automatische Beladung der Ladungsträger 5, 5', 5" ist als mögliches Ausführungsbeispiel in Fig. 10 beschrieben. Natürlich sind auch andere Ausführungen einer Transfervorrichtung möglich.

Die beladenen Ladungsträger 5, 5', 5" werden von der ersten Packeinheiten-Übergabestation 10 auf einer automatisierten Fördertechnik (wie in Fig. 1 schematisch durch den Pfeil angedeutet), beispielweise Rollenförderer, Gurtförderer, und dgl. zum Packeinheitenlager 2 gefördert. Die Einlagerung der beladenen Ladungsträger 5, 5', 5" in das Packeinheitenlager 2 erfolgt durch die oben beschriebenen Regalbediengeräte.

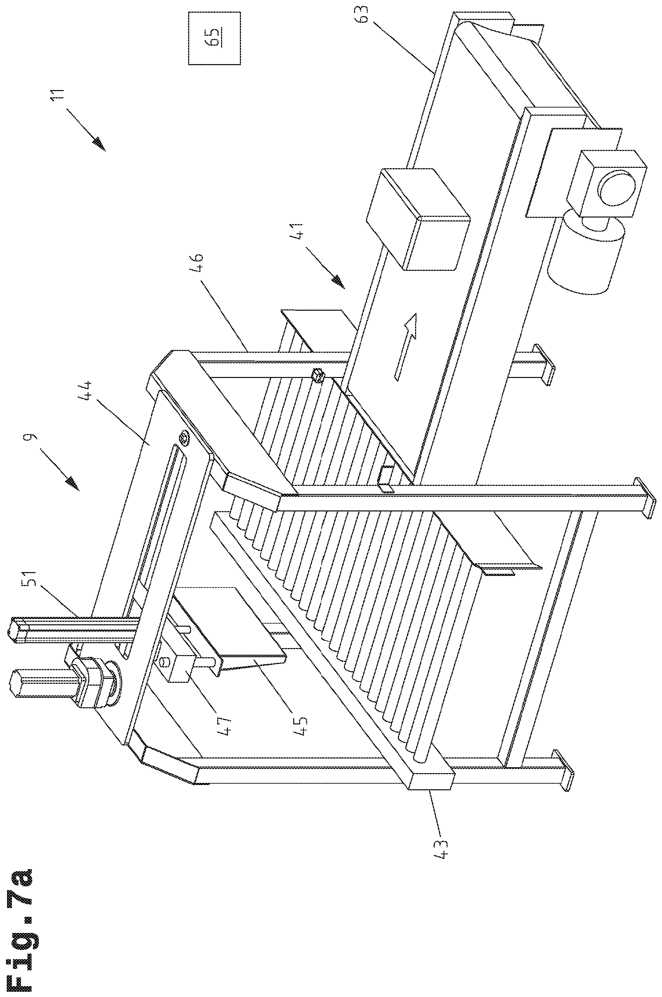

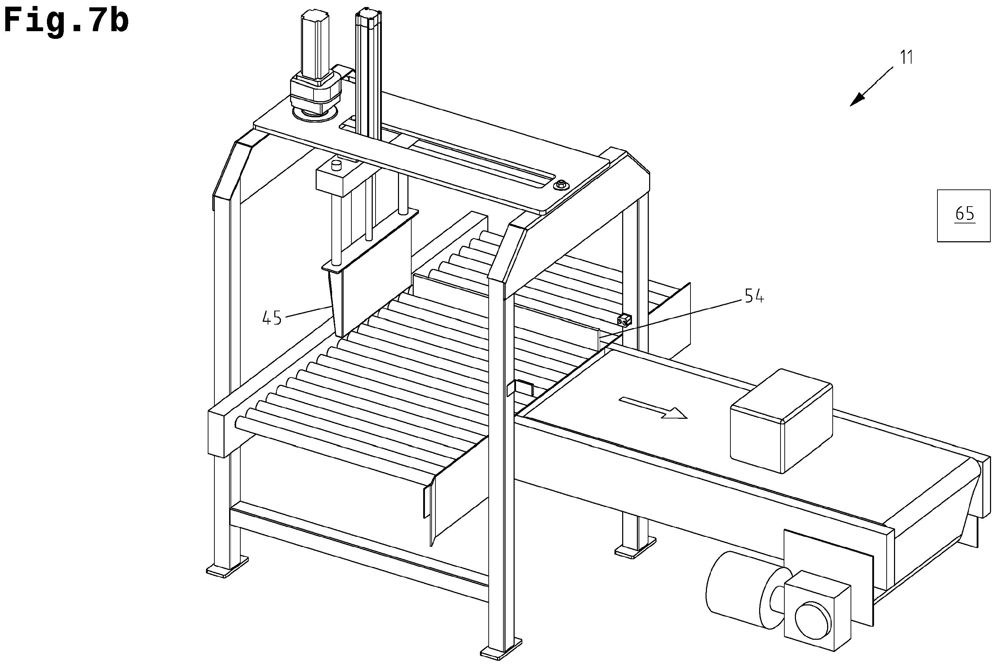

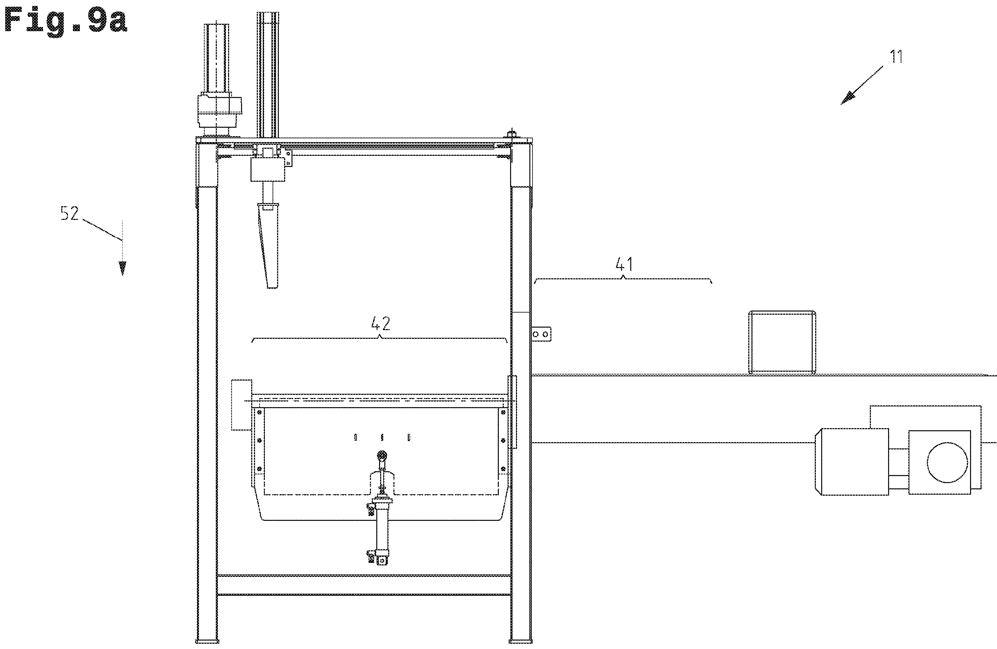

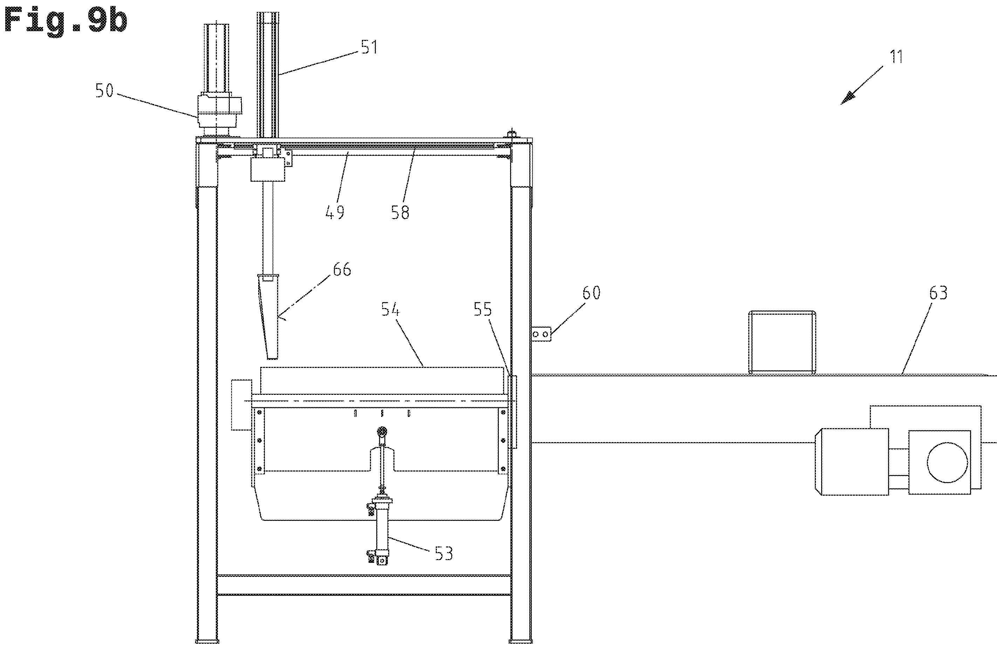

Ferner ist zwischen dem Packeinheitenlager 2 und der Kommissioniervorrichtung 6 zum manuellen oder automatisierten Beladen von Auftrags-Ladungsträger zumindest eine zweite Packeinheiten-Übergabestation 11 vorgesehen, wie in den Fig. 7a, 7b, 9a und 9b näher dargestellt.

Die beladenen Ladungsträger 5, 5', 5" werden von dem Packeinheitenlager 2 auf einer automatisierten Fördertechnik (wie in Fig. 1 schematisch durch den Pfeil angedeutet), beispielweise Rollenförderer, Gurtförderer, und dgl. zu der zweiten Packeinheiten-Übergabestation 11 gefördert. Die Auslagerung der beladenen Ladungsträger 5, 5', 5" aus dem Packeinheitenlager 2 erfolgt durch die oben beschriebenen Regalbediengeräte.

Die Packeinheiten 3 können vereinzelt oder gruppenweise von dem Ladungsträgern 5, 5', 5" abgeladen werden. Das Entladen der Ladungsträger 5, 5', 5" kann manuell oder automatisch erfolgen.

Nach einer (nicht dargestellten) ersten Ausführung können die Packeinheiten 3 von einem Werker von dem Ladungsträger 5, 5', 5" manuell abgeladen werden. Hierzu werden im Nahbereich einer zweiten Packeinheiten-Übergabestation die Ladungsträger 5, 5', 5" bereitgestellt und der Werker kann die Packeinheiten 3 direkt von einem Ladungsträger 5, 5', 5" entnehmen und bevorzugt direkt auf einen Auftrags-Ladungsträger stapeln.

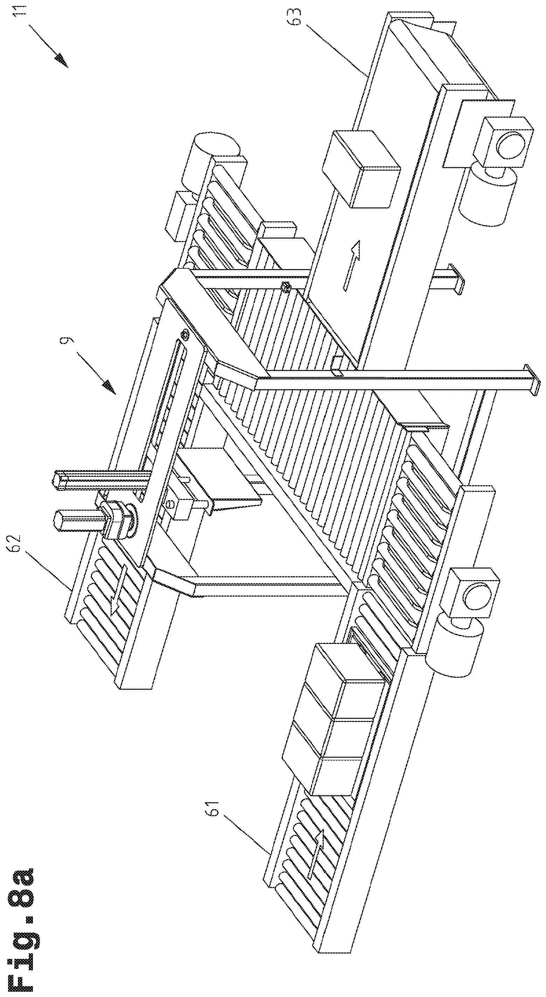

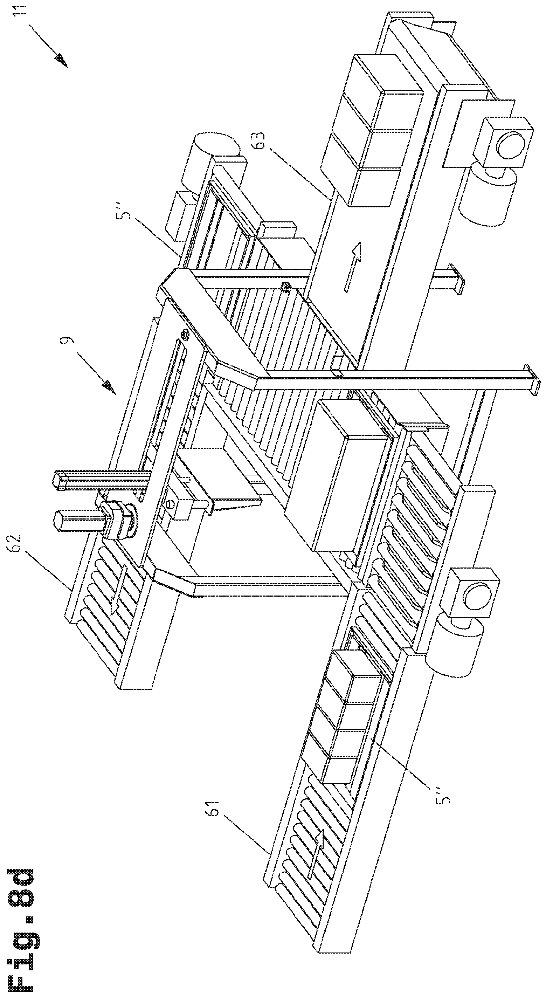

Nach einer zweiten Ausführung können die Packeinheiten 3 von einer Transfervorrichtung 9 vom Ladungsträger 5, 5', 5" automatisch abgeladen werden. Eine solche automatische Entladung der Ladungsträger 5, 5', 5" wird in den Fig. 8a-8d beschrieben.

Die Packeinheiten 3 werden von der zweiten Packeinheiten-Übergabestation 11 auf einer automatisierten Fördertechnik (wie in Fig. 1 schematisch durch den Pfeil angedeutet), beispielweise Gurtförderer, und dgl. zu der Kommissioniervorrichtung 6 gefördert.

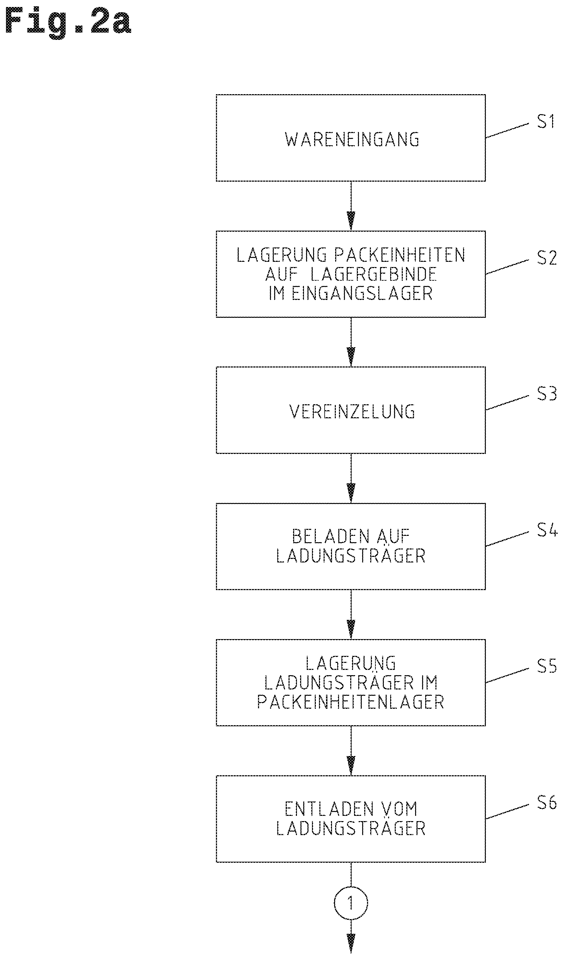

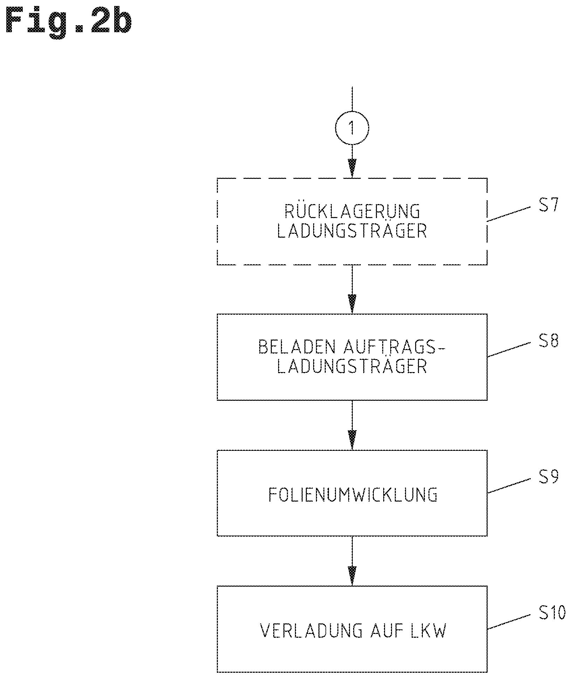

Im Nachfolgenden wird anhand der Fig. 2a und 2b das Verfahren zum Lagern und Kommissionieren von Packeinheiten 3 in dem oben beschriebenen Kommissioniersystem beschrieben.

In einem ersten Schritt S1 werden die Packeinheiten 3 auf den Lagergebinden an der Anlieferungsstation, beispielsweise mit LKW, angeliefert und danach in einem zweiten Schritt S2 im manuell oder automatisch betriebenen Eingangslager 1 eingelagert. Wie beschrieben kann das Eingangslager 1 (rechnergesteuerte) Regalbediengeräte umfassen, mit welchen die Lagergebinde in die Lagerregale eingelagert werden. Alternativ können die Lagergebinde auch mit Gabelstaplern in die Lagerregale eingelagert werden. Dieses Eingangslager 1 dient als Nachschublager, in welchem das gesamte Sortiment an Packeinheiten 3 bevorratet ist.

Das Eingangslager 1 versorgt das Packeinheitenlager 2 mit Packeinheiten 3, sofern von einem übergeordneten Rechnersystem (beispielweise Lagerverwaltungsrechner) ein Nachschubauftrag erzeugt wird. Beispielweise wird ein Nachschubauftrag erzeugt und die Umlagerung von Packeinheiten 3 vom Eingangslager 1 in das Packeinheitenlager 2 veranlasst, sofern eine Bedarfsmenge zu einer Packeinheit 3, welche in den im Rechnersystem erfassten Kommissionieraufträgen innerhalb einer Analysemenge enthalten ist, den aktuellen Bestand im Packeinheitenlager 2 überschreitet. Das Packeinheitenlager 2 dient als Pufferlager, in welchem die zu Kommissionieraufträgen innerhalb einer Analysemenge benötigten Packeinheiten 3 bevorratet sind. Grundsätzlich kann aber ein Nachschubauftrag erzeugt und die Umlagerung von Packeinheiten 3 vom Eingangslager 1 in das Packeinheitenlager 2 veranlasst werden, wenn im Packeinheitenlager 2 ein Mindestbestand zu einer Packeinheit 3 unterschritten wird.

Mit dem Nachschubauftrag werden die Packeinheiten 3 vom manuell oder automatisch betriebenen Eingangslager 1 ausgelagert. Wie beschrieben kann das Eingangslager 1 (rechnergesteuerte) Regalbediengeräte umfassen, mit welchen die Lagergebinde aus den Lagerregalen ausgelagert werden. Alternativ können die Lagergebinde auch mit Gabelstaplern aus den Lagerregalen ausgelagert werden.

Die aus dem Eingangslager 1 ausgelagerten Lagergebinde werden zu der Depalettiervorrichtung 8 gefördert. In einem Schritt S3 werden die Packeinheiten 3 mit der Depalettiervorrichtung 8 von dem Lagergebinde vereinzelt. Anschließend werden in einem Schritt S4 die Packeinheiten 3 an der ersten Packeinheiten-Übergabestation 10 einzeln oder gruppenweise auf die Ladungsträger 5, 5', 5" umgeladen.

An der ersten Packeinheiten-Übergabestation 10 werden die Packeinheiten 3 datentechnisch mit einem zugehörigen Ladungsträger 5, 5', 5" verknüpft. Die Ladungsträger 5, 5', 5" sind hierfür mit einem Datenträger 14 (Fig. 5a, 5b), insbesondere einem Barcode oder einem RFID-Transponder (Radio Frequency Identification Device), und dgl., versehen. Ebenso sind die Packeinheiten 3 mit einem Datenträger 15 (Fig. 5a, 5b), insbesondere einem Barcode oder einem RFID-Transponder (Radio Frequency Identification Device), und dgl., versehen.

Es wird unabhängig von den Abmessungen (insbesondere Grundfläche) der Packeinheiten 3 stets derselbe Ladungsträger 5, 5', 5" verwendet. Um eine bessere Lagerdichte im Packeinheitenlager 2 zu erreichen, erweist es sich von Vorteil, wenn je Ladungsträger 5, 5', 5" mehrere Packeinheiten 3 aufgenommen werden. Es wird aus einer vollständigen Packeinheitenlage eine Anzahl an Packeinheiten 3 auf einen Ladungsträger 5, 5', 5" umgeladen, welche geringer ist als die Anzahl an Packeinheiten 3 in der vollständigen Packeinheitenlage. Beispielweise enthält eine vollständige Packeinheitenlage vier Packeinheiten mit den Abmessungen 300 mm x 400 mm, so werden maximal zwei dieser Packeinheiten 3 auf den Ladungsträger 5, 5', 5" umgeladen. Enthält eine vollständige Packeinheitenlage vier Packeinheiten mit den Abmessungen 600 mm x 400 mm, so wird maximal eine dieser Packeinheiten 3 auf den Ladungsträger 5, 5', 5" umgeladen.

Der Ladungsträger 5, 5', 5" ist in der Länge und Breite nur geringfügig größer bemessen als die Länge und Breite der größten Packeinheit 3.

Nach dem Umladen der Packeinheit(en) auf den Ladungsträger 5, 5', 5" wird der Ladungsträger 5, 5', 5" mit der automatisierten Fördertechnik von der ersten Packeinheiten-Übergabestation 10 zum Packeinheitenlager 2 gefördert.

In einem Schritt S5 werden die Ladungsträger 5, 5', 5" in das Packeinheitenlager 2, insbesondere mit den (rechnergesteuerten) Regalbediengeräten in die Lagerregale eingelagert. Im Packeinheitenlager 2 befinden sich jene Packeinheiten 3, welche zu Kommissionieraufträgen benötigt werden. Die Kommissionieraufträge werden durch das (nicht dargestellten) Rechnersystem erfasst, wobei der Kommissionierauftrag einen oder mehrere Auftrags-Ladungsträger umfassen kann.

Sobald an einer Kommissioniervorrichtung 6 ein Kommissionierauftrag abzuarbeiten ist, werden die zu diesem Kommissionierauftrag benötigten Packeinheiten 3 auf den Ladungsträgern 5, 5', 5" mit zumindest einem Regalbediengerät aus dem Packeinheitenlager 2 ausgelagert und anschließend mit der automatisierten Fördertechnik von dem Packeinheitenlager 2 zu der zweiten Packeinheiten-Übergabestation 11 gefördert.

In einem Schritt S6 wird an der zweiten Packeinheiten-Übergabestation 11 die einzelne Packeinheit 3 oder, wenn auf dem Ladungsträger 5, 5', 5" mehr als eine Packeinheit 3 aufgenommen werden kann, die erforderliche Anzahl an Packeinheiten 3 vom Ladungsträger 5, 5', 5" abgeladen.

Verbleibt auf dem Ladungsträger 5, 5', 5" eine Packeinheit 3, so wird dieser Ladungsträger 5, 5', 5" mit der automatisierten Fördertechnik zu dem Packeinheitenlager 2 gefördert und anschließend mit zumindest einem Regalbediengerät in ein Lagerregal zurückgelagert, wie in Fig. 1 mit dem Doppelpfeil angedeutet und in Fig. 2 durch die strichlierten Linien mit Schritt S7 eingetragen.

In einem Schritt S8 werden die zu dem Kommissionierauftrag benötigten Packeinheiten 3 in einer durch das Rechnersystem ermittelten Beladungskonfiguration auf den Auftrags-Ladungsträger gestapelt. Die Packeinheiten 3 werden der Kommissioniervorrichtung 6 in einer aus der Beladungskonfiguration ermittelten Beladereihenfolge (Sequenz) zugeführt und in dieser Beladereihenfolge nacheinander auf den Auftrags-Ladungsträger gestapelt. Hierzu ist es erforderlich, dass die Ladungsträger 5, 5', 5" bereits vor der zweiten Packeinheiten-Übergabestation 11 in die Beladereihenfolge (Sequenz) sortiert werden oder die Packeinheiten 3 nach der zweiten Packeinheiten-Übergabestation 11 in die Beladereihenfolge (Sequenz) sortiert werden. Auch ist eine Kombination aus einer ersten Sortierstufe (Sortierung der Packeinheiten 3 auf den Ladungsträgern 5, 5', 5") vor der zweiten Packeinheiten-Übergabestation 11 und aus einer zweiten Sortierstufe nach der zweiten Packeinheiten-Übergabestation 11 (Sortierung der Packeinheiten 3) möglich.

Es werden hierzu zu jeder Packeinheit 3 von dem Rechnersystem die Packeinheiten-Eigenschaften, wie die Abmessungen, das Gewicht, die Dichte und/oder Form der Packeinheit 3, elektronisch erfasst und als Stammdaten in einer Datenbank hinterlegt. Die Packeinheiten 3 können über den Datenträger, insbesondere einen Identifikationscode, eindeutig identifiziert werden. Das Rechnersystem ermittelt aus den in der Datenbank gespeicherten Packeinheiten-Eigenschaften eine bezüglich der Stabilität, Volumenausnutzung und/oder Höhe und dgl. optimierte räumliche (dreidimensionale) Beladungskonfiguration im Ladestapel auf dem Auftrags-Ladungsträger (Ausliefergebinde). Aus der Beladungskonfiguration wird die Beladereihenfolge (Sequenz) ermittelt, in welcher der Ladestapel auf dem Auftrags-Ladungsträger (Ausliefergebinde) aufgebaut wird. Der Ladestapel ist stabil und transportfähig, wenn die schweren Packeinheiten 3 im unteren Bereich des Ladestapels und die leichtere Packeinheiten 3 im oberen Bereich des Ladestapels gelagert sind. Ebenso sind empfindlichere Packeinheiten 3 im oberen Bereich des Ladestapels besser untergebracht. Der Ladestapel soll außerdem möglichst dicht gepackt und möglichst hoch sein. Die Packeinheiten 3 müssen demnach in einer durch die Beladungskonfiguration festgelegten Beladereihenfolge aufeinanderfolgend der Kommissioniervorrichtung 6 zugeführt werden.

In einem Schritt S9 wird der Ladestapel auf dem Auftrags-Ladungsträger (Ausliefergebinde) mit Folie umwickelt. Beispielweise ist es möglich, dass der Ladestapel bereits während des Stapelvorganges (Beladen des Auftrags-Ladungsträgers) mit Folie umwickelt wird. In diesem Fall umfasst jede Kommissioniervorrichtung einen (stationären) Stapelschacht und eine unterhalb dieser angeordnete Wickelvorrichtung (Ringwickler). Sobald eine Stapellage aus dem Stapelschacht während einer Absenkbewegung des Auftrags-Ladungsträgers heraustritt, wird die Stapellage mit einer Folie umwickelt. Eine solche Ausführung ist beispielweise in der WO 2009/109218 A1 und EP 2 358 617 B1 beschrieben.

Nach einer anderen Ausführung ist eine Wickelvorrichtung (Ringwickler) mehreren Kommissioniervorrichtungen zugeordnet. An der Kommissioniervorrichtung wird ein mobiler Schlichtcontainer bereitgestellt, der den sich bildenden Ladestapel von zumindest drei Seiten umgibt und so als Abstützfläche für eine Schiebebewegung der Packeinheiten 3 in Horizontalrichtung dienen kann. Sobald ein Auftrags-Ladungsträger mit einem Ladestapel vollständig beladen ist, wird der Auftrags-Ladungsträger samt Schlichtcontainer zu der zentralen Wickelvorrichtung mit einer Fördertechnik oder einem Gabelstapler transportiert. Dort wird der beladene Auftrags-Ladungsträger aus dem Schlichtcontainer herausgehoben und gleichzeitig mit einer Folie zur Stabilisierung des Ladestapels umwickelt. Eine solche Ausführung ist beispielweise in der EP 1 698 573 B1 und EP 1 386 864 B1 beschrieben.

Der umwickelte Ladestapel wird schließlich in einem Schritt S10 im Verladebereich auf einen LKW verladen. Der LKW transportiert den Ladestapel auf dem Auftrags-Ladungsträger zum Lieferort, beispielsweise einer Einzelhandelsfiliale.

In den Fig. 3a bis 3d ist eine nicht erfindungsgemäße erste Ausführung eines Ladungsträgers 5 zum Transport und zur Lagerung einer Packeinheit 3 (nicht eingetragen) in einem Kommissioniersystem in unterschiedlichen Ansichten gezeigt. Fig. 3a entspricht der Ansicht gemäß der Schnittlinie X in Fig. 3b. Fig. 3c entspricht der Ansicht gemäß der Schnittlinie XX in Fig. 3b. Fig. 3d ist eine Ausschnittsvergrößerung aus Fig. 3a. Nach gezeigter Ausführung ist der Ladungsträger 5 mehrteilig ausgebildet. Genauso gut kann der Ladungsträger 5 auch einteilig, beispielsweise im Spritzgießverfahren hergestellt werden. Der Ladungsträger 5 umfasst einen Boden 21, welcher eine Transport- und Lagerfläche 22 an der Bodenunterseite, eine erste Stirnseite 23a, eine zweite Stirnseite 23b, eine erste Längsseite 24a, eine zweite Längsseite 24b und eine (einzige) Ladeebene 25 an der Bodenoberseite ausbildet. Die Transport- und Lagerfläche 22 ist geeignet auf der automatisierten Fördertechnik transportiert und auf den Lagerplätzen in den Lagerregalen abgestellt zu werden. Die erste Längsseite 24a erstreckt sich zwischen der ersten Stirnseite 23a und zweiten Stirnseite 23b. Die Ladeebene 25 verläuft zwischen der ersten Stirnseite 23a und zweiten Stirnseite 23b und ist zur Aufnahme einer einzigen Packeinheit 3 oder mehrerer Packeinheiten 3 ausgebildet. Können mehrere Packeinheiten 3 auf der Ladeebene 25 aufgenommen werden, so werden die Packeinheiten 3 in einer Reihe hintereinander und zwischen Seitenwänden abgestellt. Prinzipiell ist es auch möglich, dass die Packeinheiten 3 in einer Reihe nebeneinander zwischen Seitenwänden abgestellt werden. Denkbar ist auch, dass die Packeinheiten 3 in mehreren Reihen nebeneinander auf der Ladeebene 25 abgestellt sind.

Zusätzlich umfasst der Ladungsträger 5 eine an der Ladeebene 25 vorragende erste Seitenwand 26a im Bereich der ersten Stirnseite 23a und eine an der Ladeebene 25 vorragende zweite Seitenwand 26b im Bereich der zweiten Stirnseite 23b.

Wie in den Fig. ersichtlich erweist es sich von Vorteil, wenn optional auch im Bereich der erste Längsseite 24a eine an der Ladeebene 25 vorragende dritte Seitenwand 27a und im Bereich der zweiten Längsseite 24b eine an der Ladeebene 25 vorragende vierte Seitenwand 27b angeordnet sind.

Die Seitenwände 26a, 26b, 27a, 27b bilden somit einen an der Ladeebene 25 vorragenden umlaufenden Rand.

Die Ladeebene 25 bildet eine durchgehend unterbrechungsfreie (ebene) Transportfläche 28 aus, wie in Fig. 3b ersichtlich. Konkret ist die Transportfläche 28 zwischen der ersten Seitenwand 26a und zweiten Seitenwand 26b sowie zwischen der dritten Seitenwand 27a und vierten Seitenwand 27b ausgebildet. Sind die dritte Seitenwand 27a und vierte Seitenwand 27b nicht vorhanden, dann ist die Transportfläche 28 zwischen der ersten Seitenwand 26a und zweiten Seitenwand 26b sowie zwischen der ersten Längsseite 24a und zweiten Längsseite 24b ausgebildet. Die Transport- und Lagerfläche 22 auf der Bodenunterseite und Transportfläche 28 auf der Bodenoberseite verlaufen parallel zueinander. Die erste Seitenwand 26a umfasst zwischen der ersten Längsseite 24a und zweiten Längsseite 24b eine erste Transportrampe 29a, eine erste Führungsauflage 30a und eine erste Kante 31a zwischen der ersten Transportrampe 29a und der ersten Führungsauflage 30a. Die Transportrampe 29a schließt an die Transportfläche 28 an und bildet eine Schrägfläche 32a aus, die mit der Transportfläche 28 einen Winkel zwischen 135° und 160° einschließt. Die erste Führungsauflage 30a schließt an die Transportrampe 29a an und bildet eine im Wesentlichen parallel zur Transportfläche 28 verlaufende Führungsfläche 33a aus.

In einer vorteilhaften Ausbildung umfasst auch die zweite Seitenwand 26b zwischen der ersten Längsseite 24a und zweiten Längsseite 24b eine zweite Transportrampe 29b, eine zweite Führungsauflage 30b und eine zweite Kante 31b zwischen der zweiten Transportrampe 29b und der zweiten Führungsauflage 30b. Die Transportrampe 29b schließt an die Transportfläche 28 an und bildet eine Schrägfläche 32b aus, die mit der Transportfläche 28 einen Winkel zwischen 135° und 160° einschließt. Die zweite Führungsauflage 30b schließt an die Transportrampe 29b an und bildet eine im Wesentlichen parallel zur Transportfläche 28 verlaufende Führungsfläche 33b aus.

Es ist auch von Vorteil, wenn die erste Kante 31a und gegebenenfalls die zweite Kante 31b jeweils mit einem Radius verrundet sind. Der Radius beträgt mindestens 5 mm.

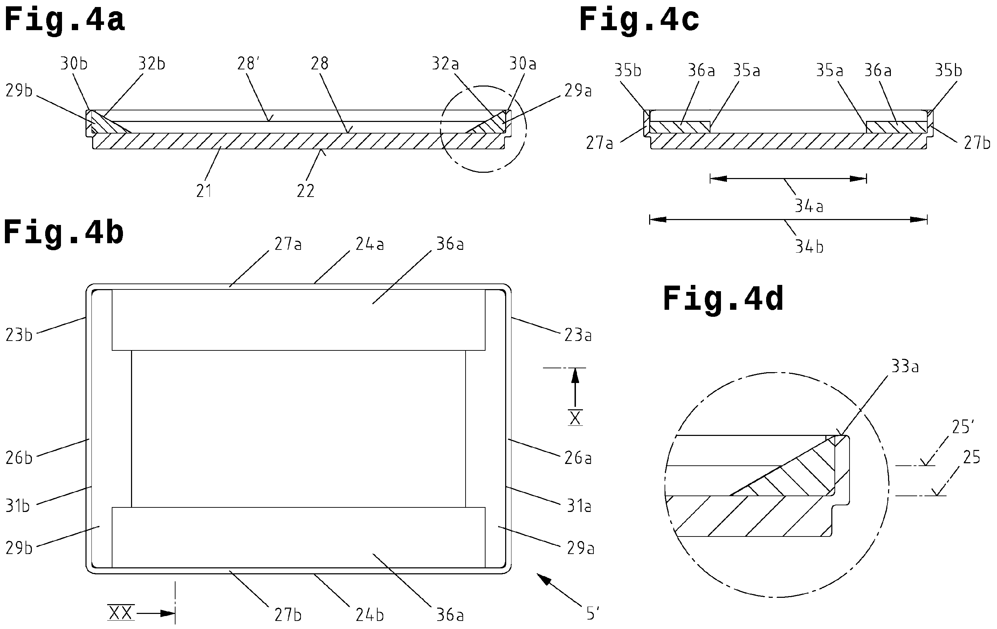

In den Fig. 4a bis 4d ist eine erfindungsgemäße Ausführung eines Ladungsträgers 5' zum Transport und zur Lagerung einer Packeinheit 3 (nicht eingetragen) in einem Kommissioniersystem in unterschiedlichen Ansichten gezeigt. Fig. 4a entspricht der Ansicht gemäß der Schnittlinie X in Fig. 4b. Fig. 4c entspricht der Ansicht gemäß der Schnittlinie XX in Fig. 4b. Fig. 4d ist eine Ausschnittsvergrößerung aus Fig. 4a. Nach gezeigter Ausführung ist der Ladungsträgers 5' mehrteilig ausgebildet. Genauso gut kann der Ladungsträger 5' auch einteilig, beispielsweise im Spritzgießverfahren hergestellt werden. Der Ladungsträger 5' umfasst einen Boden 21. Der Boden bildet eine Transport- und Lagerfläche 22 an der Bodenunterseite, eine erste Stirnseite 23a, eine zweite Stirnseite 23b, eine erste Längsseite 24a, eine zweite Längsseite 24b und Ladeebenen 25, 25' an der Bodenoberseite aus. Die erste Ladeebene 25 ist auf einem ersten Höhenniveau und die zweite Ladeebene 25' ist auf einem zweiten Höhenniveau ausgebildet, wobei die erste Ladeebene 25 in einer Ladebreite 34a durch parallel zueinander und im Wesentlichen vertikal zur ersten Ladeebene 25 ausgerichtete erste Anschlagkanten 35a begrenzt ist und wobei die zweite Ladeebene 25' in einer Ladebreite 34b durch parallel zueinander verlaufende und im Wesentlichen vertikal zur zweiten Ladeebene 25' ausgerichtete zweite Anschlagkanten 35b begrenzt ist. Die zweite Ladebreite 34b ist größer gestaltet als die erste Ladebreite 34a. Die ersten Anschlagkanten 35a werden von mit gegenseitigem Abstand parallel verlaufenden und sich zwischen der ersten / zweiten Stirnseite 23a, 23b erstreckenden Stützauflagen 36a gebildet, welche am Boden 21 an der Bodenoberseite angeordnet sind. Die Stützauflagen 36a ragen an der ersten Ladeebene 25 vor. Die zweiten Anschlagkanten 35b werden nach gezeigter Ausführung von den Seitenwänden 27a, 27b gebildet.

Da der Ladungsträger 5' die erste Ladeebene 25 und die zweite Ladeebene 25' umfasst, können Packeinheiten 3 einer ersten Breitenklasse auf der ersten Ladeebene 25 und Packeinheiten 3 einer zweiten Breitenklasse auf der zweiten Ladeebene 25' aufgenommen werden, wobei die Packeinheiten 3 aus der zweiten Breitenklasse breiter sind als die Packeinheiten 3 aus der ersten Breitenklasse.

In der ersten Breitenklasse beträgt eine Breitenabmessung der Packeinheiten 3 zwischen 100 mm und 250 mm. In der zweiten Breitenklasse beträgt eine Breitenabmessung der Packeinheiten 3 zwischen 250 mm und 400 mm.

Die Anzahl der Ladeebenen kann abhängig von den Abmessungen der Packeinheiten 3 im vorhandenen Sortiment gewählt werden.

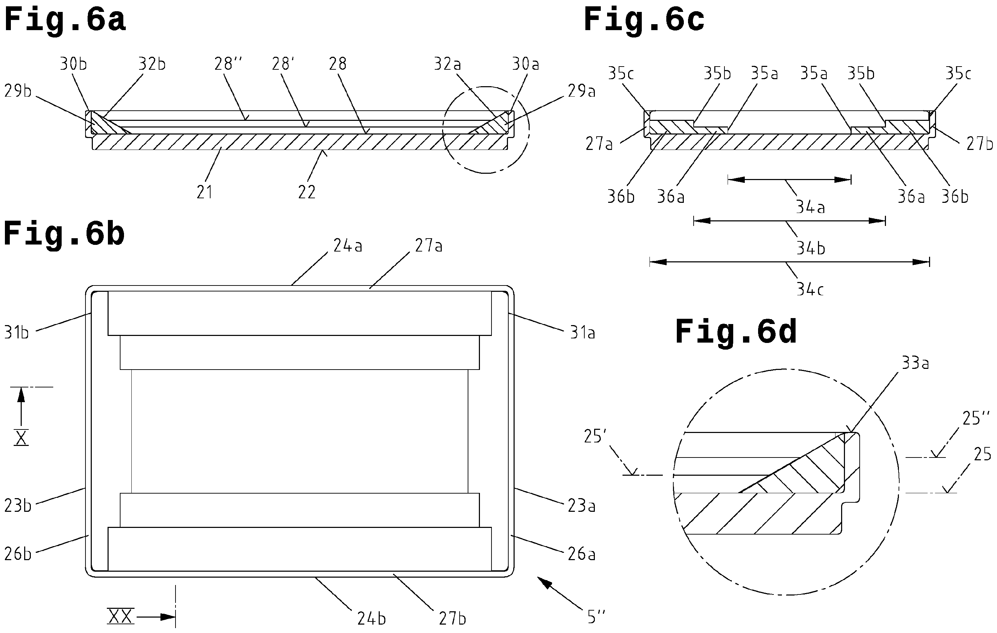

So kann auch eine dritte Ladeebene 25", wie anhand des Ladungsträgers 5" in den Fig. 5a, 5b, 6a bis 6d dargestellt. Fig. 6a entspricht der Ansicht gemäß der Schnittlinie X in Fig. 6b. Fig. 6c entspricht der Ansicht gemäß der Schnittlinie XX in Fig. 6b. Fig. 6d ist eine Ausschnittsvergrößerung aus Fig. 6a. Nach gezeigter Ausführung ist der Ladungsträger 5" mehrteilig ausgebildet. Genauso gut kann der Ladungsträger 5" auch einteilig, beispielsweise im Spritzgießverfahren hergestellt werden.

Die dritte Ladeebene 25" ist auf einem dritten Höhenniveau ausgebildet, wobei dann die erste Ladeebene 25 in einer Ladebreite 34a durch parallel zueinander und im Wesentlichen vertikal zur ersten Ladeebene 25 ausgerichtete erste Anschlagkanten 35a begrenzt ist und wobei die zweite Ladeebene 25' in einer Ladebreite 34b durch parallel zueinander verlaufende und im Wesentlichen vertikal zur zweiten Ladeebene 25' ausgerichtete zweite Anschlagkanten 35b begrenzt ist und wobei die dritte Ladeebene 25" in einer Ladebreite 34c durch parallel zueinander verlaufende und im Wesentlichen vertikal zur zweiten Ladeebene 25' ausgerichtete zweite Anschlagkanten 35c begrenzt ist.

Ist auch eine dritte Ladeebene 25" vorgesehen, so sind die zweiten Anschlagkanten 35b an mit gegenseitigem Abstand parallel verlaufenden und sich zwischen der ersten / zweiten Stirnseite 23a, 23b erstreckenden Stützauflagen 36b gebildet, welche am Boden 21 an der Bodenoberseite angeordnet sind. Die Stützauflagen 36b ragen an der zweiten Ladeebene 25' vor. Die zweiten Anschlagkanten 35b werden gemäß dieser Ausführung von den Stützauflagen 36b gebildet.

Umfasst der Ladungsträger 5" auch eine dritte Ladeebene 25", so beträgt eine Breitenabmessung der Packeinheiten 3 in der ersten Breitenklasse zwischen 100 mm und 150 mm und eine Breitenabmessung der Packeinheiten 3 in der zweiten Breitenklasse zwischen 200 mm und 250 mm und eine Breitenabmessung der Packeinheiten 3 in der dritten Ladeebene 25" zwischen 300 mm und 400 mm.

Die Transport- und Lagerfläche 22 ist geeignet auf der automatisierten Fördertechnik transportiert und auf den Lagerplätzen in den Lagerregalen abgestellt zu werden. Die erste Längsseite 24a erstreckt sich zwischen der ersten Stirnseite 23a und zweiten Stirnseite 23b. Die erste Ladeebene 25 und zweite Ladeebene 25' verlaufen zwischen der ersten Stirnseite 23a und zweiten Stirnseite 23b.

Die erste Ladeebene 25 ist zur Aufnahme einer einzigen Packeinheit 3 oder mehrerer Packeinheiten 3 ausgebildet. Ebenso ist die zweite Ladeebene 25' zur Aufnahme einer einzigen Packeinheit 3 oder mehrerer Packeinheiten 3 ausgebildet. Umfasst der Ladungsträger 5" auch eine dritte Ladeebene 25" ist die dritte Ladeebene 25" zur Aufnahme einer einzigen Packeinheit 3 oder mehrerer Packeinheiten 3 ausgebildet.

Können mehrere Packeinheiten 3 auf der ersten Ladeebene 25 und/oder zweiten Ladeebene 25' und/oder dritten Ladeebene 25" aufgenommen werden, so werden die Packeinheiten 3 in einer Reihe hintereinander zwischen den Anschlagkanten 35a, 35b, 35c und den Seitenwänden 26a, 26b abgestellt.

Der Ladungsträger 5', 5" wird vorzugsweise mit denselben Packeinheiten 3 beladen. Es sind entweder nur auf der ersten Ladeebene 25 oder nur auf der zweiten Ladeebene 25' oder nur auf der dritten Ladeebene 25" mehrere Packeinheiten 3 vorhanden. Man spricht von einem "artikelreinen" Ladungsträger 5', 5". Grundsätzlich könnten aber auf einem Ladungsträger 5', 5" auch verschiedene Packeinheiten 3 vorhanden sein. Beispielweise kann auf der ersten Ladeebene 25 eine erste Packeinheit 3 und auf der zweiten Ladeebene 25' eine zweite Packeinheit 3 und auf der dritten Ladeebene 25" eine dritte Packeinheit 3 vorhanden sein. Man spricht von einem "gemischten" Ladungsträger 5', 5".

Zusätzlich umfasst der Ladungsträger 5', 5" eine an der Ladeebene 25 vorragende erste Seitenwand 26a im Bereich der ersten Stirnseite 23a und eine an der Ladeebene 25 vorragende zweite Seitenwand 26b im Bereich der zweiten Stirnseite 23b.

Wie in den Fig. ersichtlich, sind im Bereich der ersten Längsseite 24a eine an der Ladeebene 25 vorragende dritte Seitenwand 27a und im Bereich der zweiten Längsseite 24b eine an der Ladeebene 25 vorragende vierte Seitenwand 27b angeordnet.

Die Seitenwände 26a, 26b, 27a, 27b bilden somit einen an der Ladeebene 25 vorragenden umlaufenden Rand.

Die erste Ladeebene 25 bildet nach den Ausführungen gemäß den Fig. 4a bis 4d und den Fig. 6a bis 6d eine durchgehend unterbrechungsfreie (ebene) Transportfläche 28 aus, wie in den Fig. 4b und 6b ersichtlich. Konkret ist die Transportfläche 28 zwischen der ersten Seitenwand 23a und zweiten Seitenwand 23b sowie zwischen den einander zugewandten Anschlagkanten 35a ausgebildet.

Die zweite Ladeebene 25' auf dem zweiten Höhenniveau wird durch eine an den Stützauflagen 36a ausgebildete zweite Transportfläche 28' gebildet. Konkret ist die zweite Transportfläche 28' an den von der ersten Ladeebene 25 abgewandten und parallel zueinander verlaufenden Stirnkanten der Stützauflagen 36a ausgebildet.

Umfasst der Ladungsträger 5" auch die dritte Ladeebene 25" auf dem dritten Höhenniveau, so wird die dritte Ladeebene 25" durch eine an den Stützauflagen 36b ausgebildete dritte Transportfläche 28" gebildet. Konkret ist die dritte Transportfläche 28" an den von der ersten Ladeebene 25 abgewandten und parallel zueinander verlaufenden Stirnkanten der Stützauflagen 36b ausgebildet.

Die Transport- und Lagerfläche 22 auf der Bodenunterseite und die Transportflächen 28, 28', 28" auf der Bodenoberseite verlaufen parallel zueinander. Die erste Seitenwand 26a umfasst zwischen der ersten Längsseite 24a und zweiten Längsseite 24b eine erste Transportrampe 29a, eine erste Führungsauflage 30a und eine erste Kante 31a zwischen der ersten Transportrampe 29a und der ersten Führungsauflage 30a. Die Transportrampe 29a schließt an die Transportfläche 28, 28', 28" an und bildet eine Schrägfläche 32a aus, die mit der Transportfläche 28 einen Winkel zwischen 135° und 160° einschließt. Die erste Führungsauflage 30a schließt an die Transportrampe 29a an und bildet eine im Wesentlichen parallel zur Transportfläche 28 verlaufende Führungsfläche 33a aus.

In einer vorteilhaften Ausbildung umfasst auch die zweite Seitenwand 26b zwischen der ersten Längsseite 24a und zweiten Längsseite 24b eine zweite Transportrampe 29b, eine zweite Führungsauflage 30b und eine zweite Kante 31b zwischen der zweiten Transportrampe 29b und der zweiten Führungsauflage 30b. Die Transportrampe 29b schließt an die Transportfläche 28, 28', 28" an und bildet eine Schrägfläche 32b aus, die mit der Transportfläche 28 einen Winkel zwischen 135° und 160° einschließt. Die zweite Führungsauflage 30b schließt an die Transportrampe 29b an und bildet eine im Wesentlichen parallel zur Transportfläche 28 verlaufende Führungsfläche 33b aus.

Es ist auch von Vorteil, wenn die erste Kante 31a und gegebenenfalls die zweite Kante 31b jeweils mit einem Radius verrundet sind. Der Radius beträgt mindestens 5 mm.

In den Fig. 7a, 7b, 8a bis 8d, 9a bis 9c ist eine Ausführung einer Packeinheiten-Übergabestation 11 zum Entladen eines Ladungsträgers 5, 5', 5", beispielweise des Ladungsträgers 5" gezeigt. Die Packeinheiten-Übergabestation 11 umfasst eine Transfervorrichtung 9 zum Abschieben zumindest einer Packeinheit 3 von dem Ladungsträger 5, 5', 5" auf einen Übernahmeplatz 41 und ein Fördersystem zum Transport des Ladungsträgers 5, 5', 5" und zur Positionierung des Ladungsträgers 5, 5', 5" vor dem Übernahmeplatz 41. Der Ladungsträger 5, 5', 5" ist nach einer der oben beschriebenen Ausführungsform ausgebildet. Das Fördersystem umfasst einen Andienungsplatz 42 auf einer automatisierten Fördervorrichtung 43, zu welchem der Ladungsträger 5, 5', 5" über die Fördervorrichtung 43 bewegt und auf welchem der Ladungsträger 5, 5', 5" positioniert wird, wenn zumindest eine Packeinheit 3 von dem Ladungsträger 5, 5', 5" auf den Übernahmeplatz 41 abgegeben werden muss. Der Übernahmeplatz 41 und Andienungsplatz 42 sind innerhalb eines Arbeitsbereiches der Transfervorrichtung 9 angeordnet.

Wie ersichtlich, umfasst die Transfervorrichtung 9 einen relativ gegenüber einem auf dem Andienungsplatz 42 bereitgestellten (beladenen) Ladungsträger 5, 5', 5" bewegbaren und auf einem Grundrahmen 44 gelagerten Schieber 45. Der Schieber 45 bildet eine Schiebefläche 66 aus, welche dem Ladungsträger 5, 5', 5" zugewandt ist. Die Transfervorrichtung 9 ist mit dem Grundrahmen 44 auf einem Traggestell 46 aufgebaut und ist oberhalb der Fördervorrichtung 43 angeordnet.

Der Schieber 45 ist auf einem über eine Antriebsvorrichtung entlang einer Führungsanordnung 58 bewegbaren Stellwagen 47 gelagert. Die Transfervorrichtung 9 kann optional eine nicht dargestellte Wegmessvorrichtung umfassen, mittels welchem die Verstellbewegungen des Schiebers 45 (bzw. Stellwagens 47) erfasst werden. Das Wegmesssystem ist mit einer (in den Fig. 7a, 7b schematisch dargestellten) elektronischen Steuervorrichtung 65 verbunden. Die Wegmessvorrichtung ist durch einen an sich bekannten kapazitiven Wegaufnehmer, induktiven Wegaufnehmer, magnetischen Wegaufnehmer oder optoelektronischen Wegaufnehmer gebildet. Dabei macht man sich das Messverfahren der absoluten und inkrementalen Wegmessung zu Nutze. Beispielweise kann der nachfolgend beschriebene Stellmotor 50 mit einem Resolver, Inkrementalgeber oder Absolutwertgeber versehen werden. Die Steuervorrichtung 65 ist mit dem oben beschriebenen Rechnersystem (mit der Datenbank) verbunden.

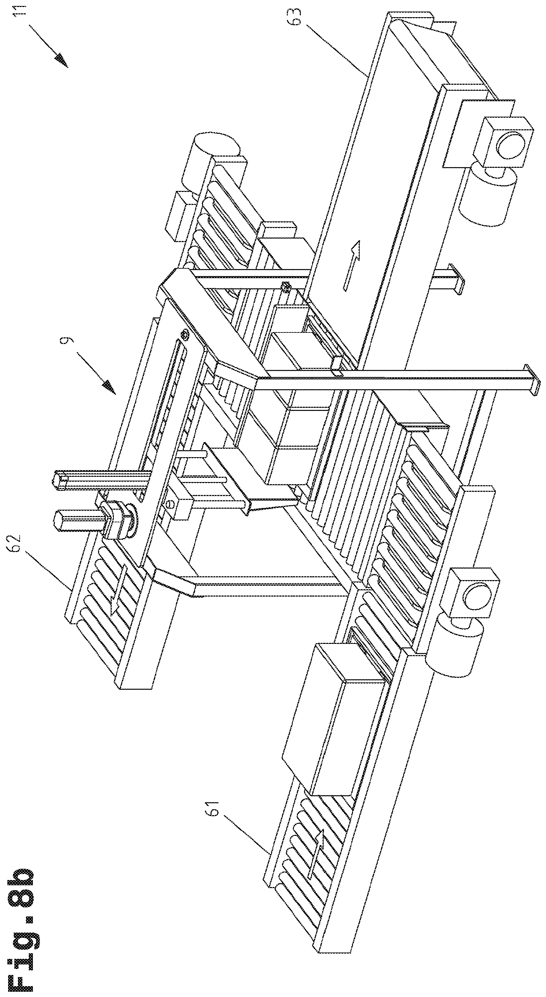

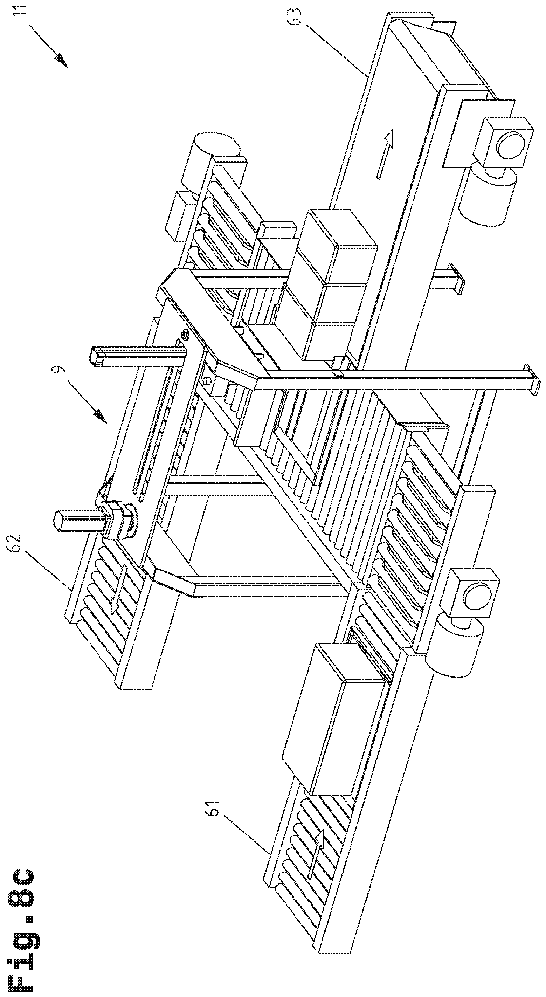

Die elektronische Steuervorrichtung 65 steuert die Antriebsvorrichtung derart an, dass der Schieber 45 in Abschieberichtung 48 aus einer in Fig. 8b dargestellten Ruhestellung in eine in Fig. 8c dargestellte Entladestellung rechnergesteuert bewegt wird, um zumindest eine Packeinheit 3 oder gleichzeitig mehrere Packeinheiten von dem Ladungsträger 5, 5', 5" auf den Übernahmeplatz 41 abzuschieben. Die Entladestellung variiert abhängig von der Breitenabmessung unterschiedlicher Packeinheiten 3 und/oder Anzahl an abzuschiebenden Packeinheiten 3. Die Steuervorrichtung 65 berechnet den Verstellweg für den Schieber 45, wobei der Schieber 45 die Entladestellung erreicht hat, wenn die entsprechende Anzahl an Packeinheiten 3 von dem Ladungsträger 5, 5', 5" auf den Übernahmeplatz 41 (vollständig) abgeschoben wurde. Der Übernahmeplatz 41 ist auf einer automatisierten Fördervorrichtung 63 zum Transport der Packeinheiten 3 (ohne Ladungsträger) ausgebildet, welche an die Packeinheiten-Übergabestation 11 anschließt.

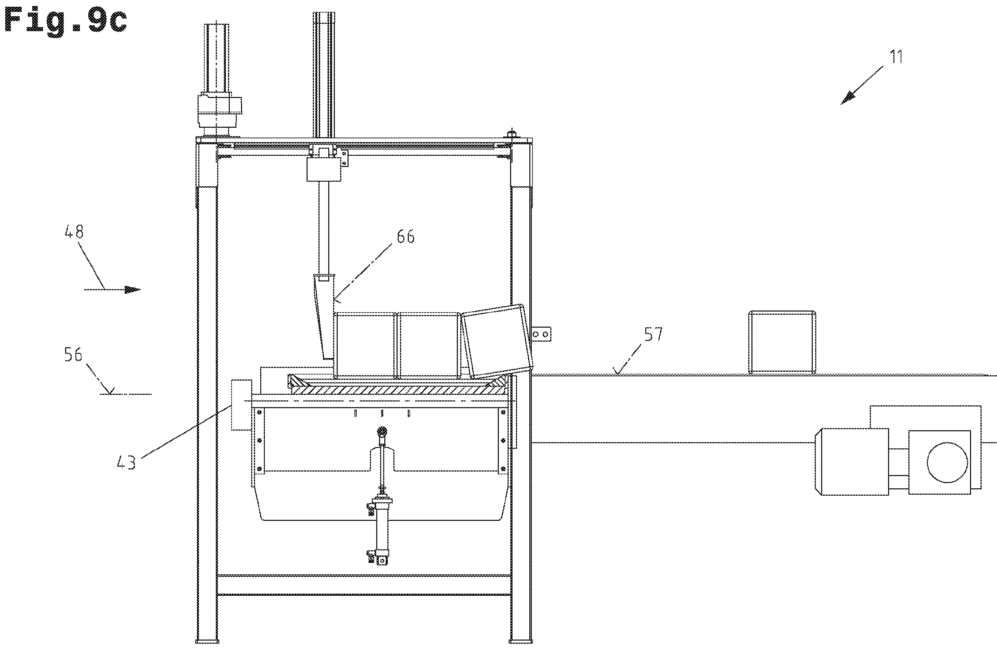

Nach gezeigter Ausführung umfasst die Antriebsvorrichtung einen mit dem Stellwagen 47 verbundenen Zugmitteltrieb 49. Der Zugmitteltrieb 49 umfasst ein endlos umlaufendes Zugmittel, welches um ein Umlenkrad und ein mit einem elektrischen Stellmotor 50 gekuppeltes Antriebsrad geführt ist. Durch Drehbewegung des Antriebsrades im Uhrzeigersinn oder im Gegenuhrzeigersinn wird der Stellwagen 47 und der auf diesem gelagerter Schieber 45 relativ zum Ladungsträger 5, 5', 5" in einer Abschieberichtung 48 (Fig. 9c) bewegt.

Der Schieber 45 ist auf dem Stellwagen 47 gelagert und kann nach einer bevorzugen Ausführung über eine Antriebsvorrichtung 51 in einer Zustellrichtung 52 (Fig. 9a) zwischen einer in den Fig. 7a, 8a, 9a dargestellten Ausgangsstellung in eine in den Fig. 7b, 8b, 9b dargestellte Eingriffsstellung bewegt werden. In der Eingriffsstellung kann zumindest eine Packeinheit 3 abgeschoben werden. Die Antriebsvorrichtung umfasst nach gezeigter Ausführung einen fluid-betätigten Zylinder, beispielweise einen Pneumatik- oder Hydraulikzylinder. Nach einer anderen (nicht gezeigten) Ausführung kann der Schieber 45 mit dem Stellwagen 47 fest verbunden werden und die Antriebsvorrichtung entfallen.

Wie in Fig. 7b ersichtlich, weist die Packeinheiten-Übergabestation 11 auch ein Positioniersystem zum Positionieren des Ladungsträgers 5, 5', 5" relativ gegenüber der Transfervorrichtung 9 auf. Das Positioniersystem weist ein über eine Antriebsvorrichtung 53 (Fig. 9b) zwischen einer in den Fig. 7a, 9a dargestellten (unterhalb einer Förderebene liegenden) Ausgangsstellung und einer in den Fig. 7b, 9b dargestellten (oberhalb einer Förderebene liegenden) Positionierstellung bewegbares erstes Anschlagelement 54 auf. Das erste Anschlagelement 54 ist beispielweise eine Anschlagplatte. Der Ladungsträger 5, 5', 5" kann gegen das in die Positionierstellung bewegbare Anschlagelement 54 positioniert werden. Zusätzlich kann das Positioniersystem 53 ein zweites Anschlagelement 55 umfassen, gegen welches der Ladungsträger 5, 5', 5" positioniert werden kann, wie in den Fig. 9a bis 9c ersichtlich. Das zweite Anschlagelement 55 ist beispielweise eine Anschlagplatte.

Der Ladungsträger 5, 5', 5" wird auf dem Andienungsplatz 42 einerseits mit einer Längsachse senkrecht zur Schiebefläche 66 ausgerichtet und andererseits die Längsachse mittig zum Andienungsplatz 42 (oder der Schiebefläche 66) zentriert, sodass eine einzelne Packeinheit 3, aber auch eine Reihe von Packeinheiten 3 ohne Verdrehung in Abschieberichtung 48 transportiert werden können.

Wie in Fig. 9c ersichtlich, liegt eine Förderebene 56 (bzw. Arbeitsebene) in der Andienungsposition und eine Förderebene 57 an dem Übernahmeplatz 41 auf unterschiedlichen Höhenniveaus. Konkret liegt eine Förderebene 56 unterhalb der Förderebene 57, wobei die Transportrampe 29a, 29b des Ladungsträgers 5, 5', 5" den Stufensprung überbrückt, wenn sich der Ladungsträger 5, 5', 5" auf dem Andienungsplatz 42 in einer Andienungsposition vor dem Übergabeplatz 41 befindet. Die Führungsfläche 33a, 33b liegt zumindest auf gleichem Höhenniveau wie die Förderebene 57, bevorzugt liegt die Führungsfläche 33a, 33b oberhalb der Förderebene 57.

Die vom Ladungsträger 5, 5', 5" abgeschobenen Packeinheiten 3 werden durch die Fördervorrichtung 63 von der Packeinheiten-Übergabestation 11 abtransportiert und danach gegebenenfalls sortiert zu einer manuellen / automatischen Kommissioniervorrichtung 6 gefördert.

Wie in den Figuren ersichtlich, kann die Packeinheiten-Übergabestation 11 eine Überwachungsvorrichtung 60 zum Erfassen einer Abgabe zumindest einer Packeinheit 3 von dem Ladungsträger 5, 5', 5" aufweisen. Die Überwachungsvorrichtung 60 umfasst eine Sensorik, beispielweise eine Lichtschranke. Die Steuervorrichtung 65 ist mit der Überwachungsvorrichtung 60 verbunden und steuert die Transfervorrichtung 9 an, um zumindest eine Packeinheit 3 vom Ladungsträger 5, 5', 5" auf den Übernahmeplatz 41 abzuschieben. Insbesondere kann die Steuervorrichtung 65 die Anzahl der vom Ladungsträger 5, 5', 5" abgegebenen Packeinheiten 3 zählen.

Das in den Fig. 8a bis 8d ersichtliche Fördersystem zum Transport der Ladungsträger 5, 5', 5" umfasst optional auch eine automatisierte Fördervorrichtung 61 zum Antransport der Ladungsträger 5, 5', 5" zu der Packeinheiten-Übergabestation 11, welche mit Packeinheiten 3 beladen sind, und eine automatisierte Fördervorrichtung 62 zum Abtransport der Ladungsträger 5, 5', 5" von der Packeinheiten-Übergabestation 11, welche nach dem Entladen noch eine Restmenge an Packeinheiten 3 oder keine Packeinheiten 3 enthalten.

In Fig. 10 ist eine Ausführung einer Packeinheiten-Übergabestation 10 zum Beladen eines Ladungsträgers 5, 5', 5" gezeigt. Die Packeinheiten-Übergabestation 10 umfasst eine Transfervorrichtung 9' zum Aufschieben zumindest einer Packeinheit 3 von einem Übergabelatz 41' auf einen Ladungsträger 5, 5', 5" und ein Fördersystem zum Transport des Ladungsträgers 5, 5', 5" und zur Positionierung des Ladungsträgers 5, 5', 5" vor dem Übergabeplatz 41'. Der Übergabeplatz 41' ist auf einer automatisierten Fördervorrichtung 63' zum Transport der Packeinheiten 3 (ohne Ladungsträger) ausgebildet, welche an die Packeinheiten-Übergabestation 10 anschließt. Der Ladungsträger 5, 5', 5" ist nach einer der oben beschriebenen Ausführungsform ausgebildet. Das Fördersystem umfasst einen Andienungsplatz 42' auf einer automatisierten Fördervorrichtung 43', zu welchem der Ladungsträger 5, 5', 5" über die Fördervorrichtung 43' bewegt wird und auf welchem der Ladungsträger 5, 5', 5" positioniert wird, wenn zumindest eine Packeinheit 3 von dem Übergabeplatz 41' auf den Ladungsträger 5, 5', 5" abgegeben werden muss.

Wie ersichtlich, umfasst die Transfervorrichtung 9' einen relativ gegenüber einem auf dem Andienungsplatz 42' bereitgestellten (leeren oder teilweise beladenen) Ladungsträger 5, 5', 5" bewegbaren und auf einem Grundrahmen 44' gelagerten Schieber 45'. Der Schieber 45' bildet eine Schiebefläche 66' (nicht eingetragen) aus, welche dem Ladungsträger 5, 5', 5" zugewandt ist. Die Transfervorrichtung 9' ist mit dem Grundrahmen 44' auf einem Traggestell 46' aufgebaut und ist oberhalb der Fördervorrichtung 43' angeordnet.

Der Schieber 45' ist auf einem über eine Antriebsvorrichtung entlang einer Führungsanordnung 58' (nicht eingetragen) bewegbaren Stellwagen 47' (nicht eingetragen) gelagert. Die Transfervorrichtung 9' kann optional eine nicht dargestellte Wegmessvorrichtung umfassen, mittels welchem die Verstellbewegungen des Schiebers 45' (bzw. Stellwagens 47') erfasst werden, wie oben ausführlich beschrieben.

Die elektronische Steuervorrichtung 65 steuert die Antriebsvorrichtung derart an, dass der Schieber 45' in Abschieberichtung 48' aus einer in strichlierten Linien dargestellten Ruhestellung in eine in festen Linien dargestellte Beladestellung rechnergesteuert bewegt wird, um zumindest eine Packeinheit 3 oder gleichzeitig mehrere Packeinheiten von dem Übergabeplatz 41' auf den Ladungsträger 5, 5', 5"abzuschieben. Die Beladestellung variiert abhängig von der Breitenabmessung unterschiedlicher Packeinheiten 3 und/oder Anzahl an aufzuschiebenden Packeinheiten 3. Die Steuervorrichtung 65 berechnet den Verstellweg für den Schieber 45', wobei der Schieber 45' die Beladestellung erreicht hat, wenn die entsprechende Anzahl an Packeinheiten 3 von dem Übergabeplatz 41' auf den Ladungsträger 5, 5', 5" (vollständig) aufgeschoben wurde. Die Steuervorrichtung 65 ist mit dem oben beschriebenen Rechnersystem (mit der Datenbank) verbunden.

Nach gezeigter Ausführung umfasst die Antriebsvorrichtung einen mit dem Stellwagen 47' verbundenen Zugmitteltrieb 49', wie oben beschrieben. Durch Drehbewegung des Antriebsrades im Uhrzeigersinn oder im Gegenuhrzeigersinn wird der Stellwagen 47' und ein auf diesem gelagerter Schieber 45' relativ zum Ladungsträger 5, 5', 5" in einer Abschieberichtung 48' bewegt.

Der Schieber 45' ist auf dem Stellwagen 47' gelagert und kann nach einer bevorzugen Ausführung über eine Antriebsvorrichtung 51' in einer Zustellrichtung 52' (nicht eingetragen) zwischen einer Ausgangsstellung und einer Eingriffsstellung bewegt werden, wie oben beschrieben. In der Ausgangsstellung ist der Schieber 45' soweit aus der Bewegungsbahn der Packeinheiten 3 heraus verstellt, dass die Packeinheiten 3 ungehindert gefördert werden können. In der Eingriffsstellung kann zumindest eine Packeinheit 3 aufgeschoben werden.

Wie in Fig. 10 ersichtlich, weist die Packeinheiten-Übergabestation 10 auch ein Ladungsträger-Positioniersystem zum Positionieren des Ladungsträgers 5, 5', 5" relativ gegenüber der Transfervorrichtung 9' auf. Das Positioniersystem umfasst ein über eine Antriebsvorrichtung 53' (nicht ersichtlich) zwischen einer (unterhalb einer Förderebene liegenden) Ausgangsstellung und einer (oberhalb einer Förderebene liegenden) Positionierstellung bewegbares erstes Anschlagelement 54', wie oben beschrieben. Das erste Anschlagelement 54' ist beispielweise eine Anschlagplatte. Der Ladungsträger 5, 5', 5" kann gegen das in die Positionierstellung bewegte erste Anschlagelement 54' in einer ersten Richtung (Förderrichtung) positioniert werden. Zusätzlich kann das Positioniersystem ein zweites Anschlagelement 55' umfassen, gegen welches der Ladungsträger 5, 5', 5" in einer zweiten Richtung (quer zur Förderrichtung) positioniert werden kann. Das zweite Anschlagelement 55' ist über eine (nicht eingetragene) Antriebsvorrichtung zwischen einer (unterhalb einer Förderebene liegenden) Ausgangsstellung und einer (oberhalb einer Förderebene liegenden) Positionierstellung bewegbar. Das zweite Anschlagelement 55' umfasst beispielweise Anschlagbolzen.

Der Ladungsträger 5, 5', 5" wird auf dem Andienungsplatz 42' einerseits mit einer Längsachse senkrecht zu einer Schiebefläche 66' (nicht eingetragen) ausgerichtet und andererseits die Längsachse mittig zum Übergabeplatz 41' (oder der Schiebefläche 66') zentriert, sodass eine einzelne Packeinheit 3, aber auch eine Reihe von Packeinheiten 3 ohne Verdrehung in Abschieberichtung 48' transportiert werden können.

Es erweist sich auch von Vorteil, wenn die Packeinheiten-Übergabestation 10 zum Beladen eines Ladungsträgers 5, 5', 5" ein Packeinheiten-Positioniersystem zum Positionieren der Packeinheit 3 oder mehrerer Packeinheiten 3 relativ gegenüber dem am Fördersystem 43' auf dem Andienungsplatz 42' bereitgestellten Ladungsträger 5, 5', 5" aufweist. Der Übergabeplatz 41' und Andienungsplatz 42' sind innerhalb eines Arbeitsbereiches der Transfervorrichtung 9' angeordnet.

Das Positioniersystem weist über (schematisch mit Doppelpfeilen angedeutete) Antriebsvorrichtungen zwischen einer Ausgangsstellung und einer Positionierstellung bewegbare Positionierelemente 64' auf. Diese Ausführung hat den Vorteil, dass eine Packeinheit 3 unabhängig von der Abmessung mittig zum Ladungsträger 5, 5', 5" positioniert wird und eine exakte Übergabe der zumindest einen Packeinheit 3 vom Übergabeplatz 41' auf den Ladungsträger 5, 5', 5" möglich ist. Das Positioniersystem ist entlang der automatisierten Fördervorrichtung 63' angeordnet, bevorzugt im Bereich des Übergabeplatzes 41'. Das Positioniersystem kann eine nicht dargestellte Wegmessvorrichtung umfassen, mittels welchem die Verstellbewegungen der Positionierelemente 64' erfasst werden. Das Wegmesssystem / die Antriebsvorrichtung ist mit der elektronischen Steuervorrichtung 65 verbunden. Die Wegmessvorrichtung ist durch einen an sich bekannten kapazitiven Wegaufnehmer, induktiven Wegaufnehmer, magnetischen Wegaufnehmer oder optoelektronischen Wegaufnehmer gebildet. Dabei macht man sich das Messverfahren der absoluten und inkrementalen Wegmessung zu Nutze. Beispielweise kann ein Stellmotor der Antriebsvorrichtung mit einem Resolver, Inkrementalgeber oder Absolutwertgeber versehen werden. Auch wenn nach gezeigter Ausführungen die Positionierelemente 64' jeweils mit einer Antriebsvorrichtung gekoppelt sind, ist es alternativ möglich, dass eine einzige Antriebsvorrichtung verwendet wird und die Positionierelemente 64' mittels einem Zugmitteltrieb bewegungsgekoppelt sind.

Wie oben beschrieben liegt auch nach dieser Ausführung der Packeinheiten-Übergabevorrichtung 10 eine Förderebene 56' (nicht eingetragen) auf dem Andienungsplatz 42' und eine Förderebene 57' an dem Übergabeplatz 41' auf unterschiedlichen Höhenniveaus. Konkret liegt eine Förderebene 56' unterhalb der Förderebene 57', wobei die Transportrampe 29a, 29b des Ladungsträgers 5, 5', 5" den Stufensprung überbrückt, wenn sich der Ladungsträger 5, 5', 5" auf dem Andienungsplatz 42' in einer Andienungsposition vor dem Übergabeplatz 41' befindet. Die Führungsfläche 33a, 33b liegt auf gleichem Höhenniveau wie die Förderebene 57', bevorzugt liegt die Führungsfläche 33a, 33b unterhalb der Förderebene 57'.

Wie ersichtlich, kann die Packeinheiten-Übergabestation 10 eine Überwachungsvorrichtung 60' zum Erfassen einer Abgabe zumindest einer Packeinheit 3 auf den Ladungsträger 5, 5', 5" aufweisen. Die Überwachungsvorrichtung 60' umfasst eine Sensorik, beispielweise eine Lichtschranke. Die Steuervorrichtung 65 ist mit der Überwachungsvorrichtung 60' verbunden und steuert die Transfervorrichtung 9' an, um zumindest eine Packeinheit 3 vom Übergabeplatz 41' auf den Ladungsträger 5, 5', 5" abzuschieben. Insbesondere kann die Steuervorrichtung 65 die Anzahl der auf den Ladungsträger 5, 5', 5" abgegebenen Packeinheiten 3 zählen.

Das Fördersystem zum Transport der Ladungsträger 5, 5', 5" umfasst optional auch eine automatisierte Fördervorrichtung 61' zum Antransport zumindest jener Ladungsträger 5, 5', 5" zu der Packeinheiten-Übergabestation 10, welche noch keine Packeinheiten 3 enthalten, und eine automatisierte Fördervorrichtung 62' zum Abtransport jener Ladungsträger 5, 5', 5" von der Packeinheiten-Übergabestation 10, welche mit einer oder mehreren Packeinheiten 3 beladen wurden.

Wie nicht näher dargestellt, kann der oben beschriebene Ladungsträger 5, 5', 5" ausschließlich an der ersten Seitenwand 26a die (erste) Transportrampe 29a, (erste) Führungsauflage 30a und (erste) Kante 31a umfassen. Dies bedeutet, dass an der zweiten Seitenwand 26b die (zweite) Transportrampe 29b, (zweite) Führungsauflage 30b und (zweite) Kante 31b nicht vorhanden sind. In diesem Fall bildet die zweite Seitenwand 26b bloß einen an der ersten Ladeebene 25, 25', 25" senkrecht vorragenden Randsteg. Nach dieser Ausbildung kann der Ladungsträger 5, 5', 5" von einer (einzigen) Seite entladen und/oder beladen werden.

Um das Entladen oder Beladen eines solchen Ladungsträgers 5, 5', 5" mithilfe der oben beschriebenen Packeinheiten-Übergabestation 10, 11 zu ermöglichen, ist lediglich dafür Sorge zu tragen, dass der Ladungsträger 5, 5', 5" am Andienungsplatz 42, 42' in der richtigen Orientierung bereitgestellt wird. Der Ladungsträger 5, 5', 5" wird am Andienungsplatz 42, 42' derart bereitgestellt, dass die erste Seitenwand 26a mit der (ersten) Transportrampe 29a, (ersten) Führungsauflage 30a und (ersten) Kante 31a benachbart zum Übernahmeplatz 41, sofern es sich um die Packeinheiten-Übergabestation 11 zum Entladen eines Ladungsträgers 5, 5', 5" handelt, oder Übergabeplatz 41', sofern es sich um die Packeinheiten-Übergabestation 10 zum Beladen des Ladungsträgers 5, 5', 5" handelt, liegt, wenn der Ladungsträger 5, 5', 5" am Andienungsplatz 42, 42' und dort insbesondere in einer Andienungsposition bereitgestellt ist.

Bevorzugt wird der Ladungsträger 5, 5', 5" durch das Fördersystem bereits in der entsprechenden Orientierung zum Andienungsplatz 42, 42' antransportiert. Falls erforderlich, kann das Fördersystem beispielsweise eine (nicht dargestellte) Fördervorrichtung umfassen, welche dazu ausgebildet ist, bedarfsweise den Ladungsträger 5, 5', 5" um eine Vertikalachse zu drehen.

Der Ordnung halber sei abschließend darauf hingewiesen, dass zum besseren Verständnis des Aufbaus des Ladungsträgers 5, 5', 5" und der Packeinheiten-Übergabestation 10, 11, diese(r) teilweise unmaßstäblich und/oder vergrößert und/oder verkleinert dargestellt wurden.

### Bezugszeichenaufstellung

- 1: Eingangslager
- 2: Packeinheitenlager
- 3: Packeinheit
- 4: Verladebereich
- 5, 5', 5": Ladungsträger

- 6: Kommissioniervorrichtung
- 8: Depalettiervorrichtung
- 9, 9': Transfervorrichtung
- 10: Packeinheiten-Übergabestation (Beladen)
- 11: Packeinheiten-Übergabestation (Entladen)
- 14: Datenträger Ladungsträger
- 15: Datenträger Packeinheit
- 21: Boden
- 22: Transport- und Lagerfläche
- 23a, 23b: Stirnseite

- 24a, 24b: Längsseite
- 25, 25', 25": Ladeebene
- 26a, 26b: Seitenwand
- 27a, 27b: Seitenwand
- 28, 28', 28": Transportfläche

- 29a, 29b: Transportrampe
- 30a, 30b: Führungsauflage
- 31a, 31b: Kante
- 32a, 32b: Schrägfläche
- 33a, 33b: Führungsfläche

- 34a, 34b, 34c: Ladebreite
- 35a, 35b, 35c: Anschlagkante
- 36a, 36b: Stützauflage
- 41, 41': Übernahmeplatz / Übergabeplatz
- 42, 42': Andienungsplatz

- 43, 43': Fördervorrichtung
- 44, 44': Grundrahmen
- 45, 45': Schieber
- 46, 46': Traggestell
- 47, 47': Stellwagen

- 48, 48': Abschieberichtung
- 49, 49': Zugmitteltrieb
- 50, 50': Stellmotor
- 51, 51': Antriebsvorrichtung
- 52, 52': Zustellrichtung
- 53, 53': Antriebsvorrichtung (Anschlagplatte)
- 54, 54': Anschlagelement
- 55, 55': Anschlagelement

- 56, 56': Förderebene
- 57, 57': Förderebene
- 58, 58': Führungsanordnung
- 60, 60': Überwachungsvorrichtung
- 61, 61': Fördervorrichtung

- 62, 62': Fördervorrichtung
- 63, 63': Fördervorrichtung
- 64': Positionierelement
- 65: Steuervorrichtung
- 66, 66': Schiebefläche

## Patentansprüche

1. Ladungsträger (5', 5'') zum Transport und zur Lagerung verschiedener Packeinheiten (3) in einem Kommissioniersystem, welcher
- einen Boden (21) umfassend
eine Transport- und Lagerfläche (22) an einer Bodenunterseite,
eine erste Stirnseite (23a),
eine zweite Stirnseite (23b),
eine erste Längsseite (24a), welche sich zwischen der ersten Stirnseite (23a) und zweiten Stirnseite (23b) erstreckt,
eine zweite Längsseite (24b), welche sich zwischen der ersten Stirnseite (23a) und zweiten Stirnseite (23b) erstreckt,
eine erste Ladeebene (25) an einer Bodenoberseite, die zwischen der ersten Stirnseite (23a) und zweiten Stirnseite (23b) verläuft und zur Aufnahme der Packeinheit (3) ausgebildet ist,
- eine gegenüber der ersten Ladeebene (25) vorragende erste Seitenwand (26a) im Bereich der ersten Stirnseite (23a),
- eine gegenüber der ersten Ladeebene (25) vorragende zweite Seitenwand (26b) im Bereich der zweiten Stirnseite (23b),
- eine gegenüber der ersten Ladeebene (25) vorragende dritte Seitenwand (27a) im Bereich der ersten Längsseite (24a), und
- eine gegenüber der ersten Ladeebene (25) vorragende vierte Seitenwand (27b) im Bereich der zweiten Längsseite (24b)
aufweist, wobei der Boden (21) auf einem ersten Höhenniveau die erste Ladeebene (25) ausbildet,
**dadurch gekennzeichnet, dass**
der Boden (21) auf einem zweiten Höhenniveau eine zweite Ladeebene (25') ausbildet, wobei die erste Ladeebene (25) in einer ersten Ladebreite (34a) durch parallel zueinander und im Wesentlichen vertikal zur ersten Ladeebene (25) ausgerichtete erste Anschlagkanten (35a) begrenzt ist und wobei die zweite Ladeebene (25') in einer zweiten Ladebreite (34b) durch parallel zueinander verlaufende und im Wesentlichen vertikal zur zweiten Ladeebene (25') ausgerichtete zweite Anschlagkanten (35b) begrenzt ist und wobei die zweite Ladebreite (34b) größer gestaltet ist als die erste Ladebreite (34a), und
wobei die ersten Anschlagkanten (35a) von mit gegenseitigem Abstand parallel verlaufenden und sich zwischen der ersten Stirnseite (23a) und der zweiten Stirnseite (23b) erstreckenden Stützauflagen (36a) gebildet sind, welche am Boden (21) an der Bodenoberseite angeordnet sind und an der ersten Ladeebene (25) vorragen, und
wobei die zweiten Anschlagkanten (35b) von der dritten und vierten Seitenwand (27a, 27b) gebildet sind, und
wobei die erste Ladeebene (25) eine durchgehend unterbrechungsfreie ebene Transportfläche (28) ausbildet, und
wobei die erste Seitenwand (26a) zwischen der ersten Längsseite (24a) und zweiten Längsseite (24b) eine erste Transportrampe (29a), welche an die Transportfläche (28) anschließt und eine Schrägfläche (32a) ausbildet, die mit der Transportfläche (28) einen Winkel (α) zwischen 135° und 160° einschließt, eine erste Führungsauflage (30a), welche an die erste Transportrampe (29a) anschließt und eine im Wesentlichen parallel zur Transportfläche (28) verlaufende Führungsfläche (33a) ausbildet, und eine erste Kante (31a) zwischen der ersten Transportrampe (29a) und der ersten Führungsauflage (30a) ausbildet, und
wobei die zweite Ladeebene (25') auf dem zweiten Höhenniveau durch eine an den Stützauflagen (36a) ausgebildete zweite Transportfläche (28') ausgebildet ist, welche an von der ersten Ladeebene (25) abgewandten und parallel zueinander verlaufenden Stirnkanten der Stützauflagen (36a) ausgebildet ist, und
wobei die Transport- und Lagerfläche (22) auf der Bodenunterseite und die Transportflächen (28, 28') auf der Bodenoberseite parallel zueinander verlaufen.

2. Ladungsträger nach Anspruch 1, **dadurch gekennzeichnet, dass** die zweite Seitenwand (26b) zwischen der ersten Längsseite (24a) und zweiten Längsseite (24b) eine zweite Transportrampe (29b), welche an die Transportfläche (28) anschließt und eine Schrägfläche (32b) ausbildet, die mit der Transportfläche (28) einen Winkel (α) zwischen 135° und 160° einschließt, eine zweite Führungsauflage (30b), welche an die zweite Transportrampe (29b) anschließt und eine im Wesentlichen parallel zur Transportfläche (28) verlaufende Führungsfläche (33b) ausbildet, und eine zweite Kante (31b) zwischen der zweiten Transportrampe (29b) und der zweiten Führungsauflage (30b) ausbildet.

3. Ladungsträger nach Anspruch 2, **dadurch gekennzeichnet, dass** die erste Kante (31a) und zweite Kante (31b) jeweils mit einem Radius verrundet sind.

4. Ladungsträger nach Anspruch 3, **dadurch gekennzeichnet, dass** der Radius mindestens 5 mm beträgt.

5. Packeinheiten-Übergabestation (10, 11) zum Beladen eines Ladungsträgers (5', 5") und/oder Entladen eines Ladungsträgers (5', 5"), umfassend
- einen Ladungsträger (5', 5"),
- eine Transfervorrichtung (9', 9) zum Aufschieben zumindest einer Packeinheit (3) von einem Übergabeplatz (41') auf den Ladungsträger (5', 5") und/oder zum Abschieben zumindest einer Packeinheit (3) von dem Ladungsträger (5', 5") auf einen Übernahmeplatz (41),
- ein Fördersystem (43, 43') zum Antransport des Ladungsträgers (5', 5") zu einem Andienungsplatz (42, 42') und zum Abtransport des Ladungsträgers (5', 5") von diesem Andienungsplatz (42, 42'), und
- ein Ladungsträger-Positioniersystem (54, 54', 55, 55') zur Positionierung des Ladungsträgers (5', 5") in eine Andienungsposition auf dem Andienungsplatz (42, 42') vor dem Übernahmeplatz (41) oder vor dem Übergabeplatz (41'),
**dadurch gekennzeichnet, dass** der Ladungsträger (5', 5") nach einem der Ansprüche 1 bis 4 ausgebildet ist.

6. Packeinheiten-Übergabestation nach Anspruch 5, **dadurch gekennzeichnet, dass** die Packeinheiten-Übergabestation (10) zum Beladen eines Ladungsträgers (5', 5") ein Packeinheiten-Positioniersystem (64') zum Positionieren der zumindest einen Packeinheit (3) relativ gegenüber dem am Fördersystem (43') in einer Andienungsposition auf dem Andienungsplatz (42') bereitgestellten Ladungsträger (5', 5") aufweist.

7. Packeinheiten-Übergabestation nach Anspruch 5, **dadurch gekennzeichnet, dass** die Transfervorrichtung (9, 9') einen relativ gegenüber einem in der Andienungsposition auf dem Andienungsplatz (42, 42') bereitgestellten Ladungsträger (5', 5") bewegbaren und auf einem Grundrahmen (44, 44') gelagerten Schieber (45, 45') umfasst.

8. Packeinheiten-Übergabestation nach Anspruch 7, **dadurch gekennzeichnet, dass** der Schieber (45, 45') mit einer Antriebsvorrichtung gekoppelt ist und aus einer Ruhestellung in eine Entladestellung oder aus einer Ruhestellung in eine Beladestellung bewegbar ist, um zumindest eine Packeinheit (3) von dem Ladungsträger (5', 5") auf den Übernahmeplatz (41) abzuschieben oder von einem Übergabeplatz (41') auf den Ladungsträger (5', 5") aufzuschieben.

9. Packeinheiten-Übergabestation nach Anspruch 8, **dadurch gekennzeichnet, dass** die Antriebsvorrichtung einen elektronisch geregelten Stellmotor (50, 50') aufweist und welche mit einer Steuervorrichtung (65) verbunden ist, die ihrerseits die Antriebsvorrichtung derart ansteuert, dass der Schieber (45, 45') eine berechnete Anzahl an Packeinheiten (3) von dem Ladungsträger (5', 5") auf den Übernahmeplatz (41) abschiebt oder eine berechnete Anzahl an Packeinheiten (3) von dem Übergabeplatz (41') auf den Ladungsträger (5', 5") aufschiebt.

10. Packeinheiten-Übergabestation nach Anspruch 5 oder 9, **dadurch gekennzeichnet, dass** die Packeinheiten-Übergabestation (10, 11) eine Überwachungsvorrichtung (60, 60'), insbesondere eine Sensorik, zum Erfassen einer Übergabe einer Packeinheit (3) von dem Übergabeplatz (41') auf den Ladungsträger (5', 5") oder zum Erfassen einer Übergabe einer Packeinheit (3) von dem Ladungsträger (5', 5") auf den Übernahmeplatz (41) aufweist, wobei eine Steuervorrichtung mit der Überwachungsvorrichtung (60, 60') verbunden ist und die Transfervorrichtung (9, 9') ansteuert, um eine Packeinheit (3) vom Übergabeplatz (41') auf den Ladungsträger (5', 5") aufzuschieben oder eine Packeinheit (3) vom Ladungsträger (5', 5") auf den Übernahmeplatz (41) abzuschieben.

11. Kommissioniersystem zum Lagern und Kommissionieren von Packeinheiten (3), umfassend
- eine erste Packeinheiten-Übergabestation (10) zum Beladen eines Ladungsträgers (5', 5") mit einer oder mehreren Packeinheiten (3),
- ein automatisiertes Packeinheitenlager (2) zum Lagern der Packeinheiten (3) auf den Ladungsträgern (5', 5"),
- eine erste Fördervorrichtung zwischen der ersten Packeinheiten-Übergabestation (10) und dem Packeinheitenlager (2),
- eine zweite Packeinheiten-Übergabestation (11) zum Entladen eines Ladungsträgers (5', 5") mit einem oder mehreren Packeinheiten (3),
- eine zweite Fördervorrichtung zwischen dem Packeinheitenlager (2) und der zweiten Packeinheiten-Übergabestation (11), und
- eine Kommissionierstation zum Beladen eines Auftrags-Ladungsträger mit Packeinheiten (3) in einer definierten Beladesequenz und gemäß einem Kommissionierauftrag,
**dadurch gekennzeichnet, dass** die erste Packeinheiten-Übergabestation (10) und/oder zweite Packeinheiten-Übergabestation (11) nach einem der Ansprüche 5 bis 10 ausgebildet ist.

## Claims

1. A load carrier (5', 5") for transporting and storing different packing units (3) in a picking system, which load carrier (5', 5") comprises
- a bottom (21) comprising
a transport and storage surface (22) at a bottom lower side,
a first front end (23a),
a second front end (23b),
a first longitudinal side (24a), which extends between the first front end (23a) and second front end (23b),
a second longitudinal side (24b), which extends between the first front end (23a) and second front end (23b),
a first loading plane (25) at a bottom upper side, which runs between the first front end (23a) and second front end (23b) and is configured for receiving the packing unit (3),
- a first side wall (26a) protruding beyond the first loading plane (25) in the region of the first front end (23a),
- a second side wall (26b) protruding beyond the first loading plane (25) in the region of the second front end (23b),
- a third side wall (27a) protruding beyond the first loading plane (25) in the region of the first longitudinal side (24a), and
- a fourth side wall (27b) protruding beyond the first loading plane (25) in the region of the second longitudinal side (24b),
wherein the bottom (21) forms the first loading plane (25) at a first height level,
**characterized in that**
the bottom (21) forms a second loading plane (25') at a second height level, wherein the first loading plane (25) is limited in a first loading width (34a) by first stop edges (35a) running parallel to each other and aligned substantially vertically to the first loading plane (25) and wherein the second loading plane (25') is limited in a second loading width (34b) by second stop edges (35b) running parallel to each other and aligned substantially vertically to the second loading plane (25') and wherein the second loading width (34b) is configured larger than the first loading width (34a), and
wherein the first stop edges (35a) are formed by support rests (36a) running in parallel at a mutual distance and extending between the first front end (23a) and the second front end (23b), which support rests (36a) are arranged at the bottom (21) on the bottom upper side and protrude at the first loading plane (25), and
wherein the second stop edges (35b) are formed by the third and fourth side walls (27a, 27b), and
wherein the first loading plane (25) forms a continuously uninterrupted planar transport surface (28), and
wherein between the first longitudinal side (24a) and second longitudinal side (24b) the first side wall (26a) forms a first transport ramp (29a) that adjoins the transport surface (28) and forms a diagonal surface (32a) which encloses an angle (α) between 135° and 160° with the transport surface (28), a first guide rest (30a) that adjoins the first transport ramp (29a) and forms a guide surface (33a) running substantially parallel to the transport surface (28), and a first edge (31a) between the first transport ramp (29a) and the first guide rest (30a), and wherein the second loading plane (25') at the second height level is formed by a second transport surface (28') configured at the support rests (36a), which second transport surface (28') is configured at front edges of the support rests (36a) facing away from the first loading plane (25) and running parallel to each other, and
wherein the transport and storage surface (22) on the bottom lower side and the transport surfaces (28, 28') on the bottom upper side run parallel to each other.

2. The load carrier according to claim 1, **characterized in that** between the first longitudinal side (24a) and second longitudinal side (24b), the second side wall (26b) forms a second transport ramp (29b) that adjoins the transport surface (28) and forms a diagonal surface (32b) which encloses an angle (α) between 135° and 160° with the transport surface (28), a second guide rest (30b) that adjoins the second transport ramp (29b) and forms a guide surface (33b) running substantially parallel to the transport surface (28), and a second edge (31b) between the second transport ramp (29b) and the second guide rest (30b).

3. The load carrier according to claim 2, **characterized in that** the first edge (31a) and second edge (31b) are each rounded with a radius.

4. The load carrier according to claim 3, **characterized in that** the radius is at least 5 mm.

5. A packing unit transfer station (10, 11) for loading a load carrier (5', 5") and/or unloading a load carrier (5', 5"), comprising
- a load carrier (5', 5"),
- a transfer device (9', 9) for pushing at least one packing unit (3) from a handover location (41') onto the load carrier (5', 5") and/or for pushing at least one packing unit (3) from the load carrier (5', 5") onto a takeover location (41),
- a conveying system (43, 43') for transporting the load carrier (5', 5") to a provisioning location (42, 42') and for transporting the load carrier (5', 5") away from this provisioning location (42, 42'), and
- a load carrier positioning system (54, 54', 55, 55') for positioning the load carrier (5', 5") in a provisioning position at the provisioning location (42, 42') in front of the takeover location (41) or in front of the handover location (41'),
**characterized in that** the load carrier (5', 5") is configured according to any one of the claims 1 to 4.

6. The packing unit transfer station according to claim 5, **characterized in that** the packing unit transfer station (10) for loading a load carrier (5', 5 ")comprises a packing unit positioning system (64') for positioning the at least one packing unit (3) relative to the load carrier (5', 5") provisioned in a provisioning position at the provisioning location (42') at the conveying system (43').

7. The packing unit transfer station according to claim 5, **characterized in that** the transfer device (9, 9') comprises a pusher (45, 45') that is movable relative to a load carrier (5', 5") provisioned in the provisioning position at the provisioning location (42, 42') and mounted on a base frame (44, 44').

8. The packing unit transfer station according to claim 7, **characterized in that** the pusher (45, 45') is coupled to a drive device and is movable from an inoperative position to an unloading position or from an inoperative position to a loading position in order to push at least one packing unit (3) from the load carrier (5', 5") onto the takeover location (41) or from a handover location (41') onto the load carrier (5', 5").

9. The packing unit transfer station according to claim 8, **characterized in that** the drive device comprises an electronically controlled actuating motor (50, 50') and which packing unit transfer station (10, 11) is connected to a control device (65), wherein the control device (65) controls the drive device such that the pusher (45, 45') pushes a calculated number of packing units (3) from the load carrier (5', 5") onto the takeover location (41) or pushes a calculated number of packing units (3) from the handover location (41') onto the load carrier (5', 5").

10. The packing unit transfer station according to claim 5 or 9, **characterized in that** the packing unit transfer station (10, 11) comprises a monitoring device (60, 60'), in particular a sensor system, for detecting a transfer of a packing unit (3) from the handover location (41') onto the load carrier (5', 5") or for detecting a transfer of a packing unit (3) from the load carrier (5', 5") onto the takeover location (41), wherein a control device is connected to the monitoring device (60, 60') and controls the transfer device (9, 9') in order to push a packing unit (3) from the handover location (41') onto the load carrier (5', 5") or push a packing unit (3) from the load carrier (5', 5") onto the takeover location (41).

11. A picking system for storing and picking packing units (3), comprising
- a first packing unit transfer station (10) for loading a load carrier (5', 5") having one or multiple packing units (3),
- an automated packing unit storage (2) for storing the packing units (3) on the load carriers (5', 5"),
- a first conveying device between the first packing unit transfer station (10) and the packing unit storage (2),
- a second packing unit transfer station (11) for unloading a load carrier (5', 5") having one or multiple packing units (3),
- a second conveying device between the packing unit storage (2) and the second packing unit transfer station (11), and
- a picking station for loading an order load carrier with packing units (3) in a defined loading sequence and according to a picking order,
**characterized in that** the first packing unit transfer station (10) and/or second packing unit transfer station (11) is configured according to any one of the claims 5 to 10.

## Revendications

1. Support de charge (5', 5") permettant de transporter et de stocker différentes unités d'emballage (3) au sein d'un système de préparation de commandes, qui présente
- un fond (21) comprenant
une surface de transport et de stockage (22) au niveau d'une face inférieure de fond,
une première face avant (23a),
une seconde face avant (23b),
une première face longitudinale (24a) qui s'étend entre la première face avant (23a) et la seconde face avant (23b),
une seconde face longitudinale (24b) qui s'étend entre la première face avant (23a) et la seconde face avant (23b),
un premier plan de chargement (25) au niveau d'une face supérieure de fond, qui s'étend entre la première face avant (23a) et la seconde face avant (23b) et est conçu pour accueillir l'unité d'emballage (3),
- une première paroi latérale (26a) faisant saillie par rapport au premier plan de chargement (25) dans la région de la première face avant (23a),
- une deuxième paroi latérale (26b) faisant saillie par rapport au premier plan de chargement (25) dans la région de la seconde face avant (23b),
- une troisième paroi latérale (27a) faisant saillie par rapport au premier plan de chargement (25) dans la région de la première face longitudinale (24a), et
- une quatrième paroi latérale (27b) faisant saillie par rapport au premier plan de chargement (25) dans la région de la seconde face longitudinale (24b),
dans lequel le fond (21) forme le premier plan de chargement (25) à un premier niveau de hauteur,
**caractérisé en ce que**
le fond (21) forme un second plan de chargement (25') à un second niveau de hauteur, dans lequel le premier plan de chargement (25) est limité dans une première largeur de chargement (34a) par des premiers bords de butée (35a) orientés parallèlement l'un à l'autre et essentiellement verticalement par rapport au premier plan de chargement (25) et dans lequel le second plan de chargement (25') est limité dans une seconde largeur de chargement (34b) par des seconds bords de butée (35b) orientés parallèlement l'un à l'autre et essentiellement verticalement par rapport au second plan de chargement (25') et dans lequel la seconde largeur de chargement (34b) est supérieure à la première largeur de chargement (34a), et
dans lequel les premiers bords de butée (35a) sont formés par des garnitures d'appui (36a) qui s'étendent parallèlement à distance l'une de l'autre entre la première face avant (23a) et la seconde face avant (23b) et sont agencées sur le fond (21) au niveau de la face supérieure de fond et font saillie au niveau du premier plan de chargement (25), et
dans lequel les seconds bords de butée (35b) sont formés par les troisième et quatrième parois latérales (27a, 27b), et
dans lequel le premier plan de chargement (25) forme une surface de transport plane (28) ininterrompue, et
dans lequel la première paroi latérale (26a) forme, entre la première face longitudinale (24a) et la seconde face longitudinale (24b), une première rampe de transport (29a), qui se raccorde à la surface de transport (28), et une surface inclinée (32a) formant un angle (α) compris entre 135° et 160° par rapport à la surface de transport (28), une première garniture de guidage (30a), qui se raccorde à la première rampe de transport (29a) et forme une surface de guidage (33a) s'étendant de manière essentiellement parallèle par rapport à la surface de transport (28), et un premier bord (31a) entre la première rampe de transport (29a) et la première garniture de guidage (30a), et
dans lequel le second plan de chargement (25') est formé au second niveau de hauteur par une seconde surface de transport (28') formée au niveau des garnitures d'appui (36a) et au niveau des bords frontaux des garnitures d'appui (36a) qui sont opposés au premier plan de chargement (25) et s'étendent parallèlement l'un à l'autre, et
dans lequel la surface de transport et de stockage (22) s'étend sur la face inférieure de fond et les surfaces de transport (28, 28') s'étendent sur la face supérieure de fond parallèlement l'une à l'autre.

2. Support de charge selon la revendication 1, **caractérisé en ce que** la deuxième paroi latérale (26b) forme, entre la première face longitudinale (24a) et la seconde face longitudinale (24b), une seconde rampe de transport (29b) qui se raccorde à la surface de transport (28) et forme une surface inclinée (32b) qui fait un angle (α) compris entre 135° et 160° par rapport à la surface de transport (28), une seconde garniture de guidage (30b) qui se raccorde à la seconde rampe de transport (29b) et forme une surface de guidage (33b) s'étendant essentiellement parallèlement à la surface de transport (28), et forme une second bord (31b) entre la seconde rampe de transport (29b) et la seconde garniture de guidage (30b).

3. Support de charge selon la revendication 2, **caractérisé en ce que** le premier bord (31a) et le second bord (31b) sont respectivement arrondis en présentant un rayon.

4. Support de charge selon la revendication 3, **caractérisé en ce que** le rayon est d'au moins 5 mm.

5. Station de transfert d'unités d'emballage (10, 11) permettant de charger un support de charge (5', 5") et/ou de décharger un support de charge (5', 5"), comprenant
- un support de charge (5', 5"),
- un dispositif de transfert (9', 9) permettant de pousser au moins une unité d'emballage (3) d'un emplacement de transfert (41') jusque sur le support de charge (5', 5") et/ou permettant de pousser au moins une unité d'emballage (3) du support de charge (5', 5") jusque sur un emplacement de prise en charge (41),
- un système de convoyage (43, 43') permettant de transporter le support de charge (5', 5") vers un emplacement de service (42, 42') et permettant de transporter le support de charge (5', 5") depuis ledit emplacement de service (42, 42'), et
- un système de positionnement de support de charge (54, 54', 55, 55') permettant de positionner le support de charge (5', 5") dans une position de service sur l'emplacement de service (42, 42') en amont de l'emplacement de prise en charge (41) ou en amont de l'emplacement de transfert (41'),
**caractérisée en ce que** le support de charge (5', 5") est réalisé selon l'une quelconque des revendications 1 à 4.

6. Station de transfert d'unités d'emballage selon la revendication 5, **caractérisée en ce que** la station de transfert d'unités d'emballage (10) permettant de charger un support de charge (5', 5") présente un système de positionnement d'unités d'emballage (64') permettant de positionner la au moins une unité d'emballage (3) par rapport au support de charge (5', 5") fourni sur l'emplacement de service (42') dans une position de service au niveau du système de transport (43').

7. Station de transfert d'unités d'emballage selon la revendication 5, **caractérisée en ce que** le dispositif de transfert (9, 9') comprend un coulisseau (45, 45') mobile par rapport à un support de charge (5', 5") fourni dans la position de service sur l'emplacement de service (42, 42') et monté sur un cadre de base (44, 44').

8. Station de transfert d'unités d'emballage selon la revendication 7, **caractérisée en ce que** le coulisseau (45, 45') est couplé à un dispositif d'entraînement et peut être déplacé d'une position de repos jusque dans une position de déchargement ou d'une position de repos jusque dans une position de chargement, afin de pousser au moins une unité d'emballage (3) du support de charge (5', 5") jusque sur l'emplacement de prise en charge (41) ou de la pousser d'un emplacement de transfert (41') jusque sur le support de charge (5', 5").

9. Station de transfert d'unités d'emballage selon la revendication 8, **caractérisée en ce que** le dispositif d'entraînement présente un servomoteur (50, 50') régulé de manière électronique et est relié à un dispositif de commande (65) qui pour sa part commande le dispositif d'entraînement de telle manière que le coulisseau (45, 45') pousse un nombre calculé d'unités d'emballage (3) du support de charge (5', 5") jusque sur l'emplacement de prise en charge (41) ou pousse un nombre calculé d'unités d'emballage (3) du poste de transfert (41') jusque sur le support de charge (5', 5").

10. Station de transfert d'unités d'emballage selon la revendication 5 ou 9, **caractérisée en ce que** la station de transfert d'unités d'emballage (10, 11) présente un dispositif de surveillance (60, 60'), en particulier un système de capteurs, permettant de détecter un transfert d'une unité d'emballage (3) de l'emplacement de transfert (41') jusque sur le support de charge (5', 5") ou permettant de détecter un transfert d'une unité d'emballage (3) du support de charge (5', 5") jusque sur l'emplacement de prise en charge (41), dans lequel un dispositif de commande est relié au dispositif de surveillance (60, 60') et commande le dispositif de transfert (9, 9') afin de pousser une unité d'emballage (3) de l'emplacement de transfert (41') jusque sur le support de charge (5', 5") ou afin de pousser une unité d'emballage (3) du support de charge (5', 5") jusque sur l'emplacement de prise en charge (41).

11. Système de préparation de commandes permettant de stocker et de préparer des unités d'emballage (3), comprenant
- une première station de transfert d'unités d'emballage (10) permettant de charger un support de charge (5', 5") avec une ou plusieurs unité(s) d'emballage (3),
- un magasin d'unités d'emballage (2) permettant de stocker les unités d'emballage (3) sur les supports de charge (5', 5"),
- un premier dispositif de transport entre la première station de transfert d'unités d'emballage (10) et le magasin d'unités d'emballage (2),
- une seconde station de transfert d'unités d'emballage (11) permettant de décharger un support de charge (5', 5") avec une ou plusieurs unité(s) d'emballage (3),
- un second dispositif de transport entre le magasin d'unités d'emballage (2) et la seconde station de transfert d'unités d'emballage (11), et
- une station de préparation de commandes permettant de charger un support de charge correspondant à une requête avec des unités d'emballage (3) dans une séquence de chargement définie et conformément à une requête de préparation de commandes, **caractérisé en ce que** la première station de transfert d'unités d'emballage (10) et/ou la seconde station de transfert d'unités d'emballage (11) est réalisée selon l'une quelconque des revendications 5 à 10.
